(19) European Patent Office · Europäisches Patentamt · European Patent Office · Office européen des brevets

(11) **EP 3 846 546 B1**

(12) **EUROPEAN PATENT SPECIFICATION**

(45) Date of publication and mention
of the grant of the patent:
**20.12.2023 Bulletin 2023/51**

(21) Application number: **19856025.2**

(22) Date of filing: **19.08.2019**

(51) International Patent Classification (IPC):
$H04W\ 48/20$ (2009.01)   $H04W\ 24/02$ (2009.01)
$H04W\ 40/22$ (2009.01)   $H04W\ 76/19$ (2018.01)
$H04W\ 84/04$ (2009.01)   $H04W\ 76/30$ (2018.01)

(52) Cooperative Patent Classification (CPC):
**H04W 76/19; H04W 40/22; H04W 76/30;**
H04W 36/0009; H04W 36/305; H04W 84/047

(86) International application number:
**PCT/CN2019/101314**

(87) International publication number:
**WO 2020/042945 (05.03.2020 Gazette 2020/10)**

(54) **LINK INTERRUPTION PROCESSING METHOD AND DEVICE**

VERFAHREN UND VORRICHTUNG ZUR VERARBEITUNG VON
VERBINDUNGSUNTERBRECHUNGEN

DISPOSITIF ET PROCÉDÉ DE GESTION D'INTERRUPTION DE LIAISON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2018 CN 201811015469**

(43) Date of publication of application:
**07.07.2021 Bulletin 2021/27**

(60) Divisional application:
**23210309.3**

(73) Proprietor: **Datang Mobile Communications
Equipment Co., Ltd.
Beijing 100083 (CN)**

(72) Inventor: **CHEN, Zhe
Beijing 100191 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
CN-A- 102 892 131       CN-A- 103 686 911
CN-A- 107 613 507       CN-A- 107 613 507
US-A1- 2014 307 542     US-A1- 2018 054 749
US-A1- 2018 132 168

- ZTE: "Discussion on IAB topology adaptation",
3GPP DRAFT; R3-183688 - DISCUSSION ON IAB
TOPOLOGY ADAPTATION, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG2, no. Montreal,
Canada; 20180702 - 20180706 1 July 2018
(2018-07-01), XP051467976, Retrieved from the
Internet:
URL:http://www.3gpp.org/ftp/Meetings%5F3GP
P%5FSYNC/RAN3/Docs [retrieved on
2018-07-01]
- ALCATEL-LUCENT: "R2-103682, Radio link
failure handling by RN", 3GPP TSG-RAN WG2
Meeting #70bis, 2 July 2010 (2010-07-02),
XP050451176,
- Metaswitch: "What is 5G Integrated Access and
Backhaul (IAB)?", , 20 June 2022 (2022-06-20),
XP055933294, Retrieved from the Internet:
URL:https://www.metaswitch.com/knowledge-c
enter/reference/what-is-5g-integrated-acce
ss-and-backhaul-iab [retrieved on 2022-06-20]

**(Cont. next page)**

- HUAWEI: "Destination Address and Forwarding Path based Routing for IAB", 3GPP DRAFT; R3-184799 DESTINATION ADDRESS AND FORWARDING PATH BASED ROUTING FOR IAB, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG3, no. Gothenburg, Sweden; 20180820 - 20180824 10 August 2018 (2018-08-10), XP051528143, Retrieved from the Internet: URL:http://www.3gpp.org/ftp/tsg%5Fran/WG3%5FIu/TSGR3%5F101/Docs/R3%2D184799%2Ezip [retrieved on 2018-08-10]
- VIVO: "Initial consideration on dynamic route selection", 3GPP DRAFT; R2-1804996_ INITIAL CONSIDERATION ON DYNAMIC ROUTE SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Sanya, China; 20180416 - 20180420 14 April 2018 (2018-04-14), XP051428690, Retrieved from the Internet: URL:http://www.3gpp.org/ftp/Meetings%5F3GPP%5FSYNC/RAN2/Docs/ [retrieved on 2018-04-14]

**Description**

**TECHNICAL FIELD**

The present disclosure relates to the field of communication technologies, in particular to a link interruption processing method, and device.

**BACKGROUND**

In future development of mobile communication systems, in order to better meet user needs and greatly increase network capacity and throughput, more transmission nodes and greater transmission bandwidth will be introduced. In a fifth-generation (5G) network, the number of access stations has greatly increased, but it may not guarantee that all access stations have a condition for wired backhaul, so wireless relay nodes are introduced. In order to further expand network coverage, multi-hop relay is also allowed.

In a wireless backhaul network, a terminal (UE) connects to one of wireless relay nodes. As the terminal moves, the terminal enters a coverage area of another wireless relay node. Within a relay architecture of a fourth generation (4G) mobile communication system, there is usually only one wireless relay node, while a terminal may connected to a network through multiple wireless relay nodes within a relay architecture of a 5G system. When a wireless relay node fails or a link fails, in order to ensure service, a scheme is needed to recover a connection between a terminal and a donor base station (Donor gNB). Document "R3-183688" discussed schemes of IAB migration when blockage or local congestion happens. Furthermore, we will give several further considerations for IAB node handover and reestablishment.

Document CN 107 613 507 A discloses a method for processing a link failure. The method includes: monitoring, by a relay node, a working state of a wireless link where the relay node is located; and when the relay node detects that the wireless link fails, sending a wireless link failure message to all neighboring access devices, the radio link failure message being used for notifying all the neighboring access devices to select a new route and/or a new access cell.

**SUMMARY**

An objective of embodiments of the present disclosure is to provide a link interruption processing method for a wireless relay node and a device according to the appended set of claims, which may recover a connection between a terminal to a donor base station when a radio network link fails.

According to a first aspect of an embodiment of the present disclosure, a link interruption processing method is provided, and the method is applied to a first relay node on a wireless backhaul path of a first terminal, and includes: releasing, by the first relay node after detecting that an upper-level radio link on the wireless backhaul path fails, a connection between the first relay node and a second relay node.

The second relay node is a lower-level relay node of the first relay node on the wireless backhaul path.

According to a second aspect of an embodiment of the present disclosure, another link interruption processing method is provided, and the method is applied to a second relay node on a wireless backhaul path of a first terminal, and includes:

releasing, by the second relay node after a first relay node detects that an upper-level radio link on the wireless backhaul path fails, a connection between the second relay node and the first relay node.

The first relay node is an upper-level relay node of the second relay node on the wireless backhaul path.

According to a third aspect of an embodiment of the present disclosure, another link interruption processing method in a relay network is provided, and the method is applied to a relay node on a wireless backhaul path of a first terminal, and includes:

releasing, by the relay node after an upper-level radio link on the wireless backhaul path fails, connections between the relay node and all terminals; and sending, in a case that there is a lower-level relay node of the relay node on the wireless backhaul path, to the lower-level relay node an indication message indicating that the upper-level radio link fails.

According to a fourth aspect of an embodiment of the present disclosure, another link interruption processing method in a relay network is provided, and the method is applied to a target relay node on a wireless backhaul path of a first terminal, and includes:

performing, by the target relay node, a corresponding processing according to a pre-configured processing strategy and a positional relationship between the target relay node and a failed link where a link failure occurs.

In a case that the target relay node is configured with a first processing strategy, and the target relay node is a relay node at a first end of the failed link, the first end is an end of the failed link close to a first terminal side, the target relay node performs the steps of the link interruption processing method described in the first aspect of the embodiments of the present disclosure;

In a case that the target relay node is configured with a first processing strategy, and the target relay node is a lower-level relay node of a relay node at a first end of the failed link, the target relay node performs the steps of the link interruption processing method described in the second aspect of the embodiments of the present disclosure;

In a case that the target relay node is configured with a second processing strategy, and the failed link is an upper-level link of the target relay node, the target relay node performs the steps of the link interruption processing method described in the third aspect of the embodiments of the present disclosure;

According to a sixth aspect of an embodiment of the present disclosure, a first relay node is provided, where the first relay node is a relay node on a wireless backhaul path of a first terminal, and the first relay node includes: a transceiver, a storage, a processor and a program stored in the storage and executable by the processor.

The processor is configured to read the program in the storage and execute the following process: releasing, after detecting that an upper-level radio link on the wireless backhaul path fails, a connection between the first relay node and a second relay node.

The second relay node is a lower-level relay node of the first relay node on the wireless backhaul path.

According to a seventh aspect of an embodiment of the present disclosure, a first relay node is provided, where the first relay node is a relay node on a wireless backhaul path of a first terminal, and the first relay node includes:

a release unit, configured to release, after detecting that an upper-level radio link on the wireless backhaul path fails, a connection between the first relay node and a second relay node.

The second relay node is a lower-level relay node of the first relay node on the wireless backhaul path.

According to an eighth aspect of an embodiment of the present disclosure, a second relay node is provided, where the second relay node is a relay node on a wireless backhaul path of a first terminal, and the second relay node includes: a transceiver, a storage, a processor and a program stored in the storage and executable by the processor.

The processor is configured to read the program in the storage and execute the following process: releasing, after detecting of a first relay node that an upper-level radio link on the wireless backhaul path fails, a connection between the second relay node and the first relay node.

The first relay node is an upper-level relay node of the second relay node on the wireless backhaul path.

According to a ninth aspect of an embodiment of the present disclosure, a second relay node is provided, where the second relay node is a relay node on a wireless backhaul path of a first terminal, and the second relay node includes: a release unit, configured to release, after a first relay node detects that an upper-level radio link on the wireless backhaul path fails, a connection between the second relay node and the first relay node.

The first relay node is an upper-level relay node of the second relay node on the wireless backhaul path.

According to a tenth aspect of an embodiment of the present disclosure, a relay node is provided, where the relay node is located on a wireless backhaul path of a first terminal, and the relay node includes: a transceiver, a storage, a processor and a program stored in the storage and executable by the processor.

The processor is configured to read the program in the storage and execute the following process: releasing, after an upper-level radio link on the wireless backhaul path fails, connections between the relay node and all terminals.

The transceiver is configured to send, in a case that there is a lower-level relay node of the relay node on the wireless backhaul path, to the lower-level relay node an indication message indicating that the upper-level radio link fails.

According to an eleventh aspect of an embodiment of the present disclosure, a relay node is provided, where the relay node is located on a wireless backhaul path of a first terminal, and the relay node includes:

a release unit, configured to release, after an upper-level radio link on the wireless backhaul path fails, connections between the relay node and all terminals;
a transceiver unit, configured to send, in a case that there is a lower-level relay node of the relay node on the wireless backhaul path, to the lower-level relay node an indication message indicating that the upper-level radio link fails.

According to a twelfth aspect of an embodiment of the present disclosure, a target relay node is provided, where the target relay node is located on a wireless backhaul path of a first terminal, and includes: a transceiver, a storage, a processor and a program stored in the storage and executable by the processor.

The processor is configured to read the program in the storage and execute the following process: performing a corresponding processing according to a pre-configured processing strategy and a positional relationship between the target relay node and a failed link where a link failure occurs.

In a case that the target relay node is configured with a first processing strategy, and the target relay node is a relay node at a first end of the failed link, the first end is an end of the failed link close to a first terminal side, the steps of the link interruption processing method described in the first aspect of the embodiments of the present disclosure are performed.

In a case that the target relay node is configured with a first processing strategy, and the target relay node is a lower-level relay node of a relay node at a first end of the failed link, the steps of the link interruption processing method described in the second aspect of the embodiments of the present disclosure are performed.

In a case that the target relay node is configured with a second processing strategy, and the failed link is an upper-level link of the target relay node, the steps of the link interruption processing method described in the third aspect of the embodiments of the present disclosure are performed.

An embodiment of the present disclosure further provides a computer readable storage medium having a computer program stored thereon, where the computer program is performed by a processor to implement the steps of the access (methods) described as above.

The link interruption processing method and device are provided in embodiments of the present disclosure, when an upper-level radio link of a relay node fails, a connection between the relay node and a lower-level relay node is released, to prompt the lower-level relay node to reselect an access node, or a connection between the relay node and a terminal is released, to prompt the terminal to reselect an access node, so that a connection between the terminal and a donor base station may be recovered.

## BRIEF DESCRIPTION OF THE DRAWINGS

Various other advantages and benefits will become apparent to those of ordinary skill in the art upon reading the detailed description of optional embodiments below. The drawings are only for the purpose of illustrating optional embodiments and are not to be considered as limiting the present disclosure. Moreover, the same reference numerals are used throughout the drawings to refer to the same components. In the drawings:

Fig. 1 is a schematic diagram of an architecture structure of a 5G mobile communication system in the related art;
Fig.2 is a schematic diagram of a protocol stack architecture of a user plane of a 5G mobile communication system in the related art;
Fig.3 is a schematic diagram of a protocol stack architecture of a control plane of a 5G mobile communication system in the related art;
Fig.4 is a schematic diagram of an application scenario of a link interruption processing method according to an embodiment of the disclosure;
Fig.5 is a first schematic flowchart illustrating a link interruption processing method according to an embodiment of the present disclosure;
Fig.6 is a second schematic flowchart illustrating a link interruption processing method according to an embodiment of the present disclosure;
Fig.7 is a third schematic flowchart illustrating a link interruption processing method according to an embodiment of the present disclosure;
Fig.8 is a first application example diagram of a link interruption processing method according to an embodiment of the present disclosure;
Fig.9 is a second application example diagram of a link interruption processing method according to an embodiment of the present disclosure;
Fig.10 is a third application example diagram of a link interruption processing method according to an embodiment of the present disclosure;
Fig.11 is a first schematic structural diagram of a first relay node according to an embodiment of the present disclosure;
Fig.12 is a second schematic structural diagram of a first relay node according to an embodiment of the present disclosure;
Fig.13 is a first schematic structural diagram of a second relay node according to an embodiment of the present disclosure;
Fig.14 is a second schematic structural diagram of a second relay node according to an embodiment of the present disclosure;
Fig.15 is a first schematic structural diagram of a relay node according to an embodiment of the present disclosure;
Fig.16 is a second schematic structural diagram of a relay node according to an embodiment of the present disclosure;
Fig.17 is a schematic structural diagram of a target relay node according to an embodiment of the present disclosure.

## DETAILED DESCRIPTION

The technical solutions of embodiments of the present disclosure will be clearly and completely described below with reference to the drawings of embodiments of the present disclosure, apparently, the described embodiments are some embodiments of the present disclosure, but are not all the embodiments. Based on embodiments of the present disclosure, all other embodiments derived by a person of ordinary skill in the art without any creative efforts shall fall within the scope of the present disclosure.

The terms "comprise" in the specification and the claims of the present application and any variants thereof are intended to cover non-exclusive inclusions, for example, a process, a method, a system, a product, or a device that includes a series of steps or units is not necessarily limited to those steps or units clearly listed, but may include other steps or units not explicitly listed or inherent to such processes, methods, products or devices. In addition, the term "and / or" in the specification and claims indicates at least one of connected objects, for example, A and/or B may mean these three cases: A exists alone, B exists alone and A and B exist simultaneously.

In embodiments of the present disclosure, terms such as "exemplary" or "for example" are used to represent examples, illustrations, or explanations. In embodiments of the present disclosure, any embodiment or design solution described as "exemplary" or "for example" should not be construed as being more preferable or advantageous than other embodiments or design solutions. Rather, use of terms such as "illustrative" or "for example" is intended to present concepts in a concrete manner.

In order to better understand the technical solutions of embodiments of the present disclosure, the following technical points are introduced firstly.

(1) Introduction to a 5G mobile communication system

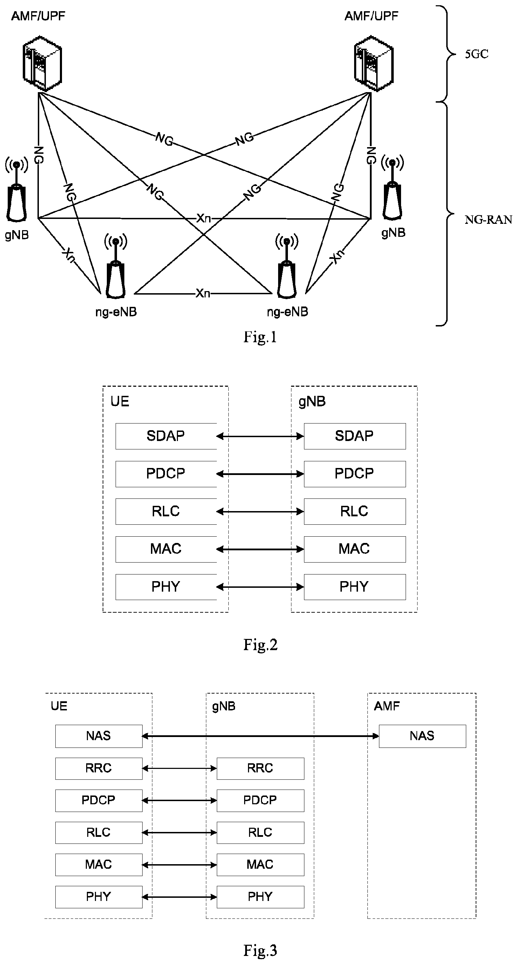

In a 5G mobile communication system, wired connections are mostly used between nodes on a network side, and gNBs (NR NodeB) are connected via a wired link, and an gNB and a core network node, e.g., an Access and Mobility Management Function (AMF) entity, a User Plane Function (UPF) entity, etc., are also connected by a wired link, as shown in Fig. 1.

(2) Introduction to a 5G wireless protocol architecture

Basic protocol layers of a user plane in 5G include: Service Data Adaptation Protocol (SDAP), Packet Data Convergence Protocol (PDCP), Radio Link Control Protocol (RLC), media Access control (MAC) and physical layer (PHY). Protocol layers of a control plane includes: Non-access stratum (NAS), radio resource control (RRC), PDCP, RLC, MAC and PHY Schematic diagrams of protocol stack architectures of the user plane and the control plane are shown in Fig.2 and Fig.3 respectively.

Embodiments of the present disclosure will be described below with reference to the drawings. A link interruption processing method and a device provided in an embodiment of the present disclosure may be applied to a wireless communication system. The wireless communication system may be a 5G system, or an evolved long term evolution (eLTE) system, or a subsequent evolved communication system.

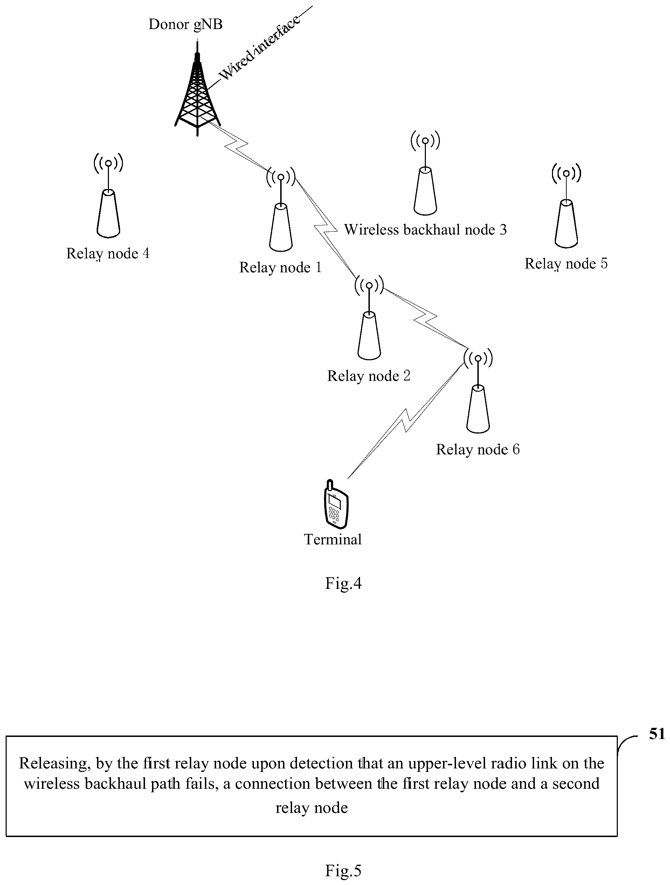

Fig.1 shows an application scenario of a link interruption processing method according to an embodiment of the present disclosure. Wireless relay nodes 1-6 in Fig.4 form a wireless backhaul network, where a multi-hop backhaul path is established from a network-side node (such as a base station) to a terminal via a wireless relay node 1, a wireless relay node 2, and a wireless relay node 6 in sequence. As an example of a 5G system, the wireless relay node in Fig.4 may be an Integrated Access and Backhaul node (IAB node). The IAB node may have a complete base station function, or may only have a data forwarding function similar to a base station. A network-side node connected with a wired interface is a base station, which is also referred to as a donor base station (Donor base station (also referred to as DgNB) in an embodiment of the present disclosure. Communication between a donor base station and a wireless relay node is performed through a wireless interface. Communication between wireless relay nodes is also performed through a wireless interface.

A connection between donor base stations provided in an embodiment of the present disclosure is usually wired, and a connection between a donor base station and a core network node is usually also wired. A donor base station in an embodiment of the present disclosure may be a commonly used base station, an evolved node base station (eNB), or a network-side device in a 5G system (e.g., a next generation node base station (gNB) or a transmission and reception point (TRP)), etc. A wireless relay node in an embodiment of the present disclosure may have a complete base station function, or may only have a data forwarding function similar to a base station. A terminal in an embodiment of the present disclosure may specifically be a mobile phone (or handset), or other devices capable of transmitting or receiving radio signals, including a User Equipment (UE), a Personal Digital Assistant (PDA), a wireless modem, a wireless communication device, a handheld device, a laptop computer, a cordless phone, a Wireless Local Loop (WLL) station, a Customer Premise Equipment (CPE) or an intelligent mobile hotspot capable of converting mobile signals into WiFi signals, an intelligent household appliance, other equipment capable of communicating spontaneously with a mobile communication network without human intervention, or the like.

In embodiments of the present disclosure, a preceding-hop node of a certain wireless relay node refers to a preceding-hop node on a wireless backhaul path starting from a donor base station to a terminal via one or more wireless relay nodes in sequence. In other words, a preceding-hop node of a certain wireless relay node is an upper-level node of the wireless relay node close to the donor base station side on the wireless backhaul path. Similarly, a next-hop node of a certain wireless relay node is a next-hop node of the wireless relay node close to the terminal side on the wireless backhaul path.

As shown in Fig.5, an embodiment of the present disclosure provides a link interruption processing method, and the method is applied to a first wireless relay node on a wireless backhaul path of a first terminal and includes Step 51.

Step 51: releasing, by the first relay node after detecting that an upper-level radio link on the wireless backhaul path fails, a connection between the first relay node and a second relay node.

Here, the first relay node may be a relay node directly connected to a donor base station on the wireless backhaul path, or may also be a relay node connected to the donor base station via other relay nodes, and there is a relay node between the first relay node and the terminal. The second relay node is a lower-level relay node of the first relay node on the wireless backhaul path, that is, the second relay node is adjacent to the first relay node on the wireless backhaul path, and is close to relay nodes on the terminal side. The upper-level radio link of the first relay node on the wireless backhaul path refers to: a radio link between the first relay node and an upper-level node of the first relay node, specifically, the upper-level node may be other relay nodes or the donor base station.

In the above step, if the first relay node is directly connected to the donor base station, that is, the upper-level node of the first relay node is the donor base station, when the first relay node detects that the radio link between the first relay node and the donor base station fails, a connection between the first relay node and the second relay node will be released. If the upper-level node of the first relay node on the wireless backhaul path is another relay node, then, when the first relay node detects that the radio link between the first relay node and the another relay node fails, a connection between the first relay node and the second relay node will be released. Specifically, implementation of detecting radio link failure may be found in the related art, which is not specifically limited in embodiments of the present disclosure.

Through the above steps, when the first relay node in the embodiment of the present disclosure detects that a radio link between the first relay node and an upper-level node fails, the first relay node will release a connection between the first relay node and a lower-level relay node (i.e., the second relay node), thereby prompting the second relay node to reconnect to the donor base station via another relay node, and recovering a connection of the first terminal to the donor base station.

In Step 51, the first relay node sends to the second relay node a first indication message indicating that the upper-level radio link fails, where the first indication message is configured to instruct the second relay node to initiate a link reselection; the second relay node initiates the link reselection after receiving the first indication message; the first relay node releases the connection between the first relay node and the second relay node during a process of the second relay node initiating the link reselection. Through the above process, the first relay node may release the connection with the second relay node, and the second relay node may access another relay node through the link reselection, thereby recovering the connection of the first terminal to the donor base station.

After detecting that the radio link fails, the first relay node may access the second relay node with the second relay node as an upper-level relay node. Here, in the present disclosure, terminals connected to a certain relay node refer to terminals located within the coverage of the relay node and accessing a network via the relay node.

Optionally, as a second implementation, in Step 51, the first relay node sends to the second relay node a parameter configuration message for adjusting a handover parameter, where the parameter configuration message is configured to reduce a report threshold of an event-triggered measurement report, to make it easier for the second relay node to perform cell handover. In this way, the first relay node may release the connection between the first relay and the second relay node during a process of the second relay node performing handover to another relay node (assumed to be a third relay node).

Here, the handover parameter may specifically be a measurement report parameter. By adjusting the measurement report parameter, a threshold for the second relay node to report a measurement report of a neighbor cell is reduced, to make it easier for the second relay node to send the measurement report, so as to prompt the first relay node to control the second relay node to perform handover. The first relay node may update a report threshold of an event-triggered measurement report through the above parameter configuration message, so that the measurement report is easier to be reported.

For example, a trigger condition for reporting an event-triggered measurement report in the related art is:

$$Mn + Ofn + Ocn - Hys > Thresh$$

Here, $Mn$ represents a measurement result of a neighbor cell, $Ofn$ represents a specific frequency offset of the neighbor cell, $Ocn$ represents a cell-specific offset of the neighbor cell, $Hys$ represents an event hysteresis parameter, and $Thresh$ represents an event threshold. In the second implementation, the above-mentioned event threshold $Thresh$ may be lowered, for example, $Thresh$ is set to 0, so that the above-mentioned event is more easily triggered, thereby making it easier for the second relay node to perform handover from the first relay node to another relay node. It should be pointed out that, the above event trigger is only an example of a possible event, and the present disclosure is not limited to this.

Further, in order to ensure communication of a terminal connected to the first relay node or the relay node, in the above second implementation, the first relay node may access the second relay node with the second relay node as an upper-level relay node.

In the above second implementation, after the first relay node sends the parameter configuration message, in a case that the second relay node does not perform a handover to the third relay node after a preset time, the first relay node sends to the second relay node a second indication message indicating that the upper-level radio link fails, where the second indication message is configured to instruct the second relay node to adjust a handover parameter, to reduce a report threshold of an event-triggered measurement report of a fourth relay node, the fourth relay node is a lower-level relay node of the second relay node on the wireless backhaul path. In this way, after receiving the above-mentioned second indication message, the second relay node may perform processings similar to that of the first relay node to send to a lower-level node (i.e., the fourth relay node) a parameter configuration message for adjusting a handover parameter, where the parameter configuration message is configured to reduce a report threshold of an event-triggered measurement report, to make it easier for the fourth relay node to perform cell handover. In this way, the second relay node may release the connection between the second relay and the fourth relay node during a process of the fourth relay node performing handover to another relay node. Similarly, in order to ensure communication of a terminal connected to the second relay node or the relay node, in the above second implementation, the second relay node may also disconnect a connection between the second relay node and the terminal connected to the second relay node after receiving the second indication message, or, access the fourth relay node with the fourth relay node as an upper-level relay node.

Similarly, if the fourth relay node does not perform a handover to another relay node other than the second relay node after a preset time, the second relay node may also send to the fourth relay node an indication message indicating that the upper-level link fails, and so on, until a last-level relay node (that is, a relay node that a terminal accesses) on the wireless backhaul path. If the last-level relay node fails to perform handover to another relay node, the last-level relay node disconnects a connection between the last-level relay node and the terminal connected to the last-level relay node, so as to prompt the first terminal to reselect another relay node for access.

Here, the preset time may be pre-configured by the donor base station for each relay node, or may be determined by each relay node (such as the first relay node) according to a quality of service requirement of a service carried on the wireless backhaul path.

Optionally, as a third implementation, in Step 51, the first relay node sends a first Radio Resource Control (RRC) reconfiguration message to the second relay node, where the first RRC reconfiguration message carries a Master Information Block (MIB) parameter of a cell which is barred to access to the first relay node. For example, a cell Barred parameter with a value of barred may be carried to bar other nodes or terminals from accessing the first relay node. After receiving the first RRC reconfiguration message, the second relay node will disconnect from the first relay node, so that the first relay node release the connection between the first relay node and the second relay node during a process of disconnecting the second relay node from the first relay node.

In the third implementation, the first relay node may broadcast an MIB message after detecting that the upper-level radio link fails, where the MIB message carries an MIB parameter of a cell which is barred to access to the first relay node; send a paging message to a terminal in an idle or inactive state connected to the first relay node; and send a second RRC reconfiguration message to a terminal in a connection state connected to the first relay node, where the second RRC reconfiguration message carries an MIB parameter of a cell which is barred to access to the first relay node. In this way, a terminal receiving the above paging message will receive the broadcast MIB message and acquire the above MIB parameter, and a terminal receiving the above second RRC reconfiguration message will also acquire the above MIB parameter, so that these terminals will disconnect from the first relay node and reselect another relay node for access.

The link interruption processing method in the embodiment of the present disclosure is mainly described above from a side of the first relay node, and the description will be made from a side of the second relay node below.

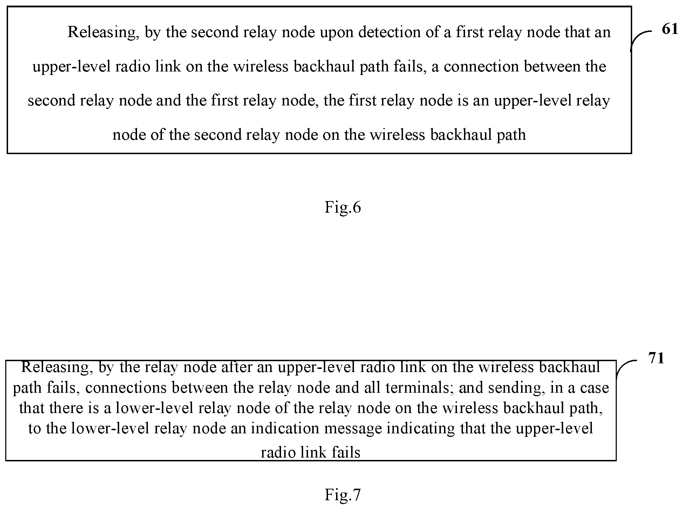

Referring to Fig.6, an embodiment of the present disclosure provides a link interruption processing method, and the method is applied to a second wireless relay node on a wireless backhaul path of a first terminal and includes Step 61.

Step 61: releasing, by the second relay node after a first relay node detects that an upper-level radio link on the wireless backhaul path fails, a connection between the second relay node and the first relay node.

The first relay node is an upper-level relay node of the second relay node on the wireless backhaul path.

In the above step, after the first relay node detects that an upper-level radio link of the first relay node fails, the second relay node will release the connection between the second relay node and the first relay node, thereby prompting the second relay node to reconnect to another relay node through link reselection, and ensuring that a communication link of the first terminal is not affected by the failure of the upper-level radio link of the first wireless relay node. A specific link reselection process is similar to cell handover of the terminal, which is not specifically limited in the embodiment of the present disclosure.

Corresponding to the first implementation, in Step 61, the second relay node may receive a first indication message sent by the first relay node indicating that the upper-level radio link fails, where the first indication message is configured to instruct the second relay node to initiate a link reselection; then, the second relay node initiates the link reselection according to the first indication message, and releases the connection between the second relay node and the first relay node.

Here, after the second relay node receives the first indication message, in a case that it is determined that there is no upper-level relay node capable of being accessed, the following processings may also be performed.

1) The second relay node may trigger the first terminal to perform a cell reselection or a handover to another relay node in a case that the second relay node is an access node of the first terminal; for example, the second relay node may disconnect the second relay node from the terminals connected to the second relay node, and make all terminals including the first terminal perform a cell reselection or a handover.
2) The second relay node may send, in a case that the second relay node is not an access node of the first terminal, to a fourth relay node a third indication message indicating that the upper-level radio link fails, where the third indication message is configured to instruct the fourth relay node to initiate a link reselection. Subsequently, the fourth relay node may adopt a processing manner similar to that of the above-mentioned second relay node until a last-level relay node.

Here, the second relay node may determine whether there is an upper-level relay node capable of being accessed in the following manners.

1) The second relay node periodically searches for and updates an available upper-level relay node capable of being accessed according to a preset search period; and determines, in a case that the available upper-level relay node is null or only the first relay node is included, that there is no upper-level relay node capable of being accessed after receiving the first indication message.

Here, the preset search period may be configured by the donor base station or set by the second relay node itself. In this manner, information about the available upper-level relay node is periodically searched for and updated. After the first indication message is received, it may be quickly determined whether there is an upper-level relay node capable of being accessed according to the information about the current available upper-level relay node, so that a service of the first terminal may be quickly recovered.

2) the second relay node searches for an upper-level relay node capable of being accessed after receiving the first indication message, and determines that there is no upper-level relay node capable of being accessed in a case that no relay node other than the first relay node is searched out.

In this manner, the search is performed after the first indication message is received, which may reduce a search workload of the second relay node and reduce a workload of the second relay node.

Corresponding to the second implementation, in Step 61, the second relay node receives a parameter configuration message for adjusting a handover parameter sent by the first relay node, where the parameter configuration message is configured to reduce a report threshold of an event-triggered measurement report; the second relay node reports a measurement report according to the parameter configuration message, and performs handover according to a control of the first relay node, and releases the connection between the second relay node and the first relay node in a process of the second relay node performing handover to another relay node (assumed to be a third relay node).

Here, after the second relay node receives the parameter configuration message, in a case that the second relay node does not perform a handover to the third relay node after a preset time, a measurement is performed according to the following manners: the second relay node receives a second indication message sent by the first relay node indicating that the upper-level radio link fails, where the second indication message is configured to instruct the second relay node to adjust a handover parameter; the second relay node sends to a fourth relay node a parameter configuration message for adjusting a handover parameter, where the parameter configuration message is configured to reduce a report threshold of an event-triggered measurement report of the fourth relay node. Through the above processings, the fourth relay node may be prompted to reselect another relay node other than the second relay node. Similarly, if the fourth relay node has not succeeded in handover after a preset time, the second relay node may send to the fourth relay node an indication message indicating that the upper-level link fails. After receiving the above indication message, the fourth relay node sends to a lower-level relay node (assuming it exists) a parameter configuration message for adjusting a handover parameter, where the parameter configuration message is configured to reduce a report threshold of an event-triggered measurement report of the lower-level relay node. The above processings are repeated until a last-level relay node on the wireless backhaul path. If the last-level relay node fails to perform handover to another relay node, the last-level relay node disconnects a connection between the last-level relay node and the terminal connected to the last-level relay node, so as to prompt the first terminal to reselect another relay node for access.

Here, the preset time may be pre-configured by the donor base station for each relay node, or may be determined by each relay node (such as the first relay node) according to a quality of service requirement of a service carried on the wireless backhaul path.

Corresponding to the third implementation, in Step 61, the second relay node receives a first RRC reconfiguration message sent by the first relay node, where the first RRC reconfiguration message carries an MIB parameter of a cell which is barred to access to the first relay node; the second relay node releases the connection with the first relay node according to the first RRC reconfiguration message during a process of disconnecting the connection with the first relay node. Subsequently, the second relay node may reaccess another relay node to recover the communication link of the first terminal.

The above describes the link interruption processing method in a link relay network provided in embodiments of the present disclosure from the side of the first relay node and the side of the second relay node respectively. Next, an embodiment of the present disclosure further provides another link interruption processing method in a link relay network, which will be described in detail below.

As shown in Fig.7, an embodiment of the present disclosure provides a link interruption processing method, and the method is applied to a wireless relay node on a wireless backhaul path of a first terminal and includes Step 71.

Step 71: releasing, by the relay node after an upper-level radio link on the wireless backhaul path fails, connections between the relay node and all terminals; and sending, in a case that there is a lower-level relay node of the relay node on the wireless backhaul path, to the lower-level relay node an indication message indicating that the upper-level radio link fails.

Here, the upper-level link of the relay node on the wireless backhaul path refers to any one or more links between the relay node and a donor base station.

In Step 71, after an upper-level radio link on the wireless backhaul path fails, the relay node may also release connections between the relay node and all terminals, so as to prompt the terminals to reselect a relay node for access. Specifically, the relay node may send to a terminal connected to the relay node a parameter configuration message for adjusting a handover parameter, where the parameter configuration message is configured to reduce a report threshold of an event-triggered measurement report; or, the relay node broadcasts an MIB message, where the MIB message carries an MIB parameter of a cell which is barred to access to the relay node, sends a paging message to a terminal in an idle or inactive state connected to the relay node, and sends an RRC reconfiguration message to a terminal in a connection state connected to the relay node, where the RRC reconfiguration message carries an MIB parameter of a cell which is barred to access to the relay node.

Through the above steps, after the upper-level link fails, the relay node may send to a lower-level relay node (if it exists) of the relay node an indication message indicating that the upper-level link fails, and the indication message is configured to indicate that the upper-level link fails. The message will be sent by relay nodes on the wireless backhaul path to a last-level relay node on the wireless backhaul path, that is, a relay node that the first terminal accesses. The last-level relay node may release connections between the relay node and all terminals (including the first terminal), so that the first terminal may reselect a relay node for access, the connection link of the first terminal to the donor base station is recovered.

Specifically, in Step 71, if the relay node itself directly accesses the donor base station, after detecting that the radio link between the relay node and the donor base station fails, the relay node may send to a lower-level relay node the indication message indicating that the upper-level link fails. If the relay node is not a relay node that directly accesses the donor base station on the wireless backhaul path, the relay node may receive the indication message sent by the upper-level relay node indicating that the upper-level link fails, or when the relay node detects that the link between the relay node and the upper-level relay node fails, the upper-level node (if it exists) sends an indication message indicating that the upper-level link fails.

Through the above steps, the indication message indicating that the upper-level link fails may be sent hop-by-hop until a last-level relay node on the wireless backhaul path. The relay node of the indication message indicating that the upper-level link fails (The last-level relay node) will release connections between the relay node and all terminals, so as to prompt these terminals to reselect a relay node for access to ensure communication of these terminals.

The above two embodiments respectively introduce the link interruption processing method of the present disclosure. It should be noted that, the schemes of the above two embodiments may be configured and used according to specific scenarios. The two schemes mentioned above may coexist in the network. For example, if the scheme in Fig.7-Fig.8 is adopted, an amount of data that needs to be forwarded may be reduced, while the scheme in Fig.5-Fig.6 may be adopted to reduce signaling overhead in the network. In an embodiment of the present disclosure, the donor base station stores wireless backhaul paths of all terminals, therefore the donor base station decides whether to adopt the schemes of Fig.5-Fig.6 or the schemes of Fig.7-Fig.8 according to the number of terminals connected to a lower-level relay node where the link failure occurs. For example, in a case that the number of terminals exceeds a preset threshold, the donor base station configures a lower-level relay node of a link, where a link failure occurs, on the wireless backhaul path to adopt the scheme in Fig.7, that is, performing the operations described in Step 71, according to the number of terminals connected to the lower-level relay node (which may include all relay nodes in the lower-level link) of the link where the link failure occurs. In a case that the number of terminals does not exceed the preset threshold, the donor base station configures an upper-level node of a link where a link failure occurs, on the wireless backhaul path to adopt the scheme in Fig.5, that is, performing operations described in Step 51, and the donor base station configures a lower-level relay node of the link, where the link failure occurs, on the wireless backhaul path to adopt the scheme in Fig.6, that is, performing operations described in Step 61.

In this way, a relay node on the wireless backhaul path may receive a processing strategy configured by the donor base station, and the processing strategy includes a first strategy (corresponding to the schemes in Fig.5-Fig.6) and a second strategy (corresponding to the scheme in Fig.7). After a link failure occurs on the wireless backhaul path of the first terminal, the target relay node performs a corresponding processing according to a pre-configured processing strategy and a positional relationship between the target relay node and a failed link where a link failure occurs.

In a case that the target relay node is configured with a first processing strategy, and the target relay node is a relay node at a first end of the failed link, here, the first end is an end of the failed link close to a first terminal side, in this case, the target relay node performs operations of Step 51 above, that is, the target relay node regards itself as the first relay node in Step 51 above, and performs the corresponding operations. For example, the first relay node releases, after detecting that an upper-level radio link on the wireless backhaul path fails, a connection between the first relay node and a second relay node, etc.

In a case that the target relay node is configured with a first processing strategy, and the target relay node is a lower-level relay node of a relay node at a first end of the failed link, in this case, the target relay node performs operations of Step 61 above, the target relay node regards itself as the second relay node in Step 61 above, and performs the corresponding operations. For example, the second relay node releases, after a first relay node detects that an upper-level radio link on the wireless backhaul path fails, a connection between the second relay node and the first relay node, etc.

In a case that the target relay node is configured with a second processing strategy, and the failed link is an upper-level link of the target relay node, the target relay node performs operations of Step 71 above. For example, after an upper-level radio link on the wireless backhaul path fails, the relay node releases connections between the target relay node and all terminals, and sends, in a case that there is a lower-level relay node of the target relay node on the wireless backhaul path, to the lower-level relay node an indication message indicating that the upper-level radio link fails.

Specific execution actions of each related relay node may be found in the introduction of the corresponding part above, which will not be repeated here to save space.

The link interruption processing methods in the embodiment of the present disclosure are described above. In order to better understand the above-mentioned embodiments, the following will further illustrate with the accompanying drawings and specific examples. It should be noted that, in the following figures and examples, the terminal takes UE as an example, the relay nodes all take IABs as an example, and the donor base station takes a Donor gNB as an example for description, but the present disclosure is not limited to this.

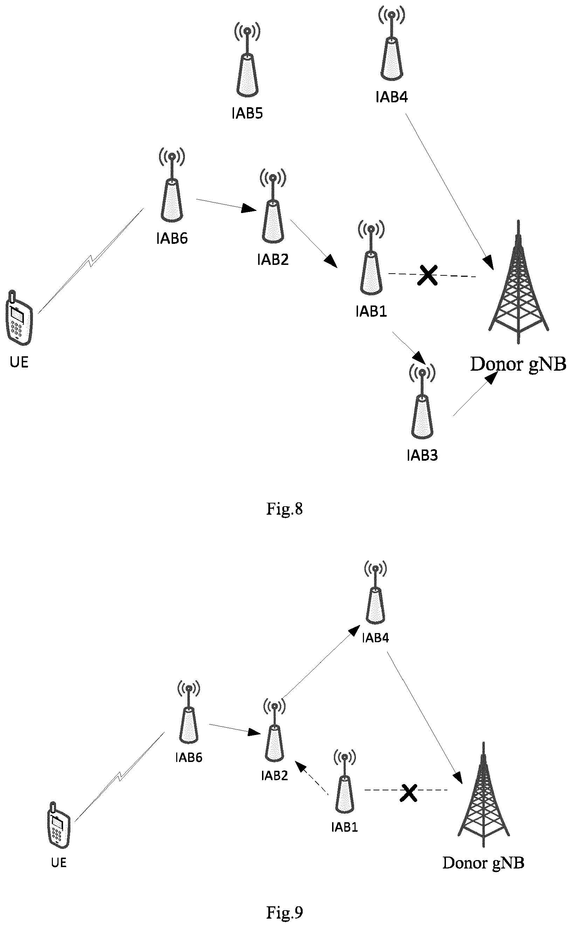

Fig. 8 shows a specific application scenario of an embodiment of the present disclosure. In Fig.8, the UE is connected to IAB2 via IAB6, then to IAB1 via the IAB2, and the IAB1 is connected to the Donor gNB. The IAB1 detects that a radio link between the IAB1 itself and the Donor gNB fails, so the IAB1 triggers a link recovery process.

Referring to implementations in Fig.5-Fig.6, the IAB1 sends a prompt message to the IAB2, and the IAB2 recovers the link by itself.

There are three manners 1-3 for the IAB2 to recover the link by itself.

Manner 1: an IAB node is preferentially responsible for recovery.

The manner 1 also specifically includes manners 1a-1c.

Manner 1a: a new signaling indication approach

In the manner 1a, the IAB 1 sends the IAB2 an indication message indicating that an upper-level radio link fails. When the IAB2 receives the above indication message sent by the IAB1, the IAB2 triggers active link reselection. As shown in Fig.9, the IAB2 enters an idle state, and may reselect IAB4, and access the Donor gNB via the IAB4.

In addition, in order to ensure that UEs connected to the IAB1 may continue performing a service, the IAB1 has the following two options.

1) The IAB1 releases connections between the IAB1 and all UEs, so that the UEs connected to the IAB1 find another IAB node for reaccess by themselves.
2) The IAB1 is reversely connected to the IAB2 as a lower-level node of the IAB2.

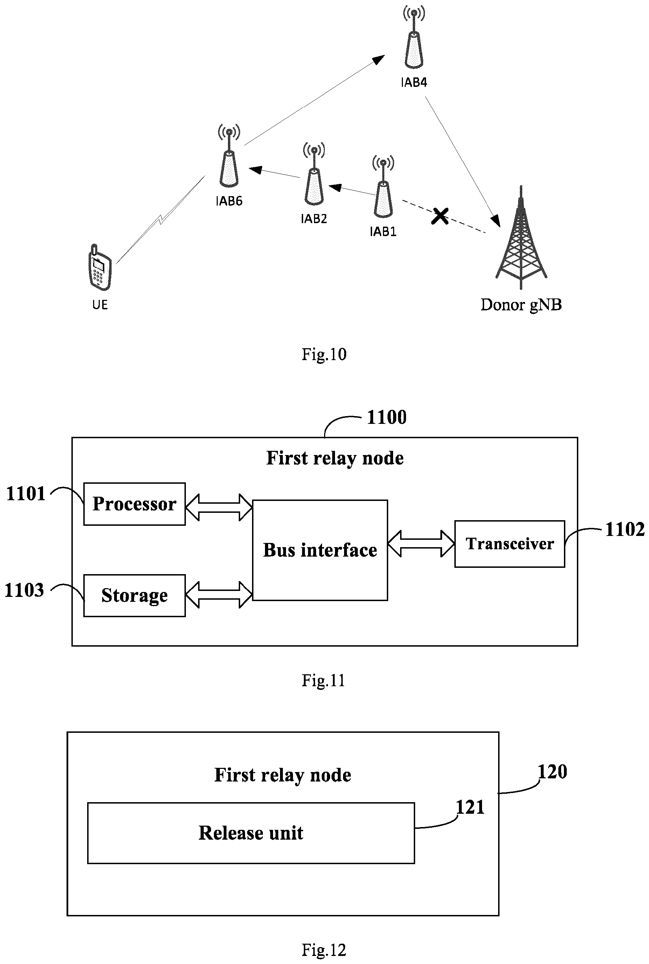

If the IAB2 receives an indication sent by the IAB1 indicating that an upper-level radio link fails, the IAB2 may not find a suitable upper-level node, then as shown in Fig. 10, the IAB2 forwards IAB6 an indication message indicating that an upper-level radio link fails, and the IAB6 searches for a new node for handover. When the IAB6 receives the above indication message sent by the IAB2, the IAB2 triggers active link reselection. As shown in Fig.10, the IAB6 enters an idle state, and may reselect the IAB4, and access the Donor gNB via the IAB4.

Similar to the behavior of the IAB 1, the IAB2 may also have the following two ways.

1) The IAB2 turns off connections between the IAB2 and all UEs, and the UEs connected to the IAB2 find another IAB node by themselves.
2) The IAB2 is reversely connected to the IAB6 as a lower-level node of the IAB6.

Here, there are the following two ways for the IAB2 to determine that there is no suitable upper-level node.

1) Periodical search

The gNB configures a period, or IAB generates a period by itself. Search is performed once per period. If the search fails, a default is that there is no suitable upper-level node. When the IAB2 receives an indication message sent by the IAB 1 indicating that an upper-level radio link fails, the IAB2 immediately forwards it to IAB6.

2) Event-triggered search

When the IAB2 receives an indication message sent by the IAB1 indicating that an upper-level radio link fails, the IAB2 starts to search for a suitable upper-level node for handover. If no suitable upper-level node is found, the IAB2 forwards the IAB6 the indication message sent by the IAB1 indicating that the upper-level radio link fails.

Manner 1b: a handover parameter adjustment approach

In this manner, the IAB1 adjusts a handover parameter of the IAB2, to trigger the IAB2 to perform handover to another IAB, such as the IAB4.

If the IAB1 does not adjust the handover parameter properly, or there is no suitable IAB in the network available for the IAB2 to perform handover, the IAB2 has not succeeded in handover after a preset time defined by a timer, the IAB1 sends to the IAB2 an indication message indicating that an upper-level link fails. After receiving the indication message, the IAB2 adjusts a handover parameter of the IAB6, and makes the IAB6 try to perform handover to another upper-level IAB node.

Here, the timer may be implemented in the following ways.

1) The DgNB configures a timer timer1 of an IAB node. When the IAB1 adjusts a handover parameter of the IAB2, for example, timer1 starts after a parameter configuration message is sent. When timer1 expires, if the IAB2 has not succeeded in handover yet, the IAB 1 sends IAB2 an indication message that the upper-level link has failed. After receiving the indication message, the IAB2 adjusts a handover parameter of the IAB6, and continues to make the IAB6 perform handover to another upper-level IAB node by using the manner 1b.
2) The IAB node analyzes an acceptable delay requirement based on QoS of a bearer service of the wireless backhaul path, and generates timer1 by itself. Then, the similar processing of the above way 1) is used, which will not be repeated here.

Manner 1c: an approach for adjust an MIB parameter to make neither a UE nor a lower-level IAB accesses

An example of an MIB parameter table is as follows.

```
MIB ::=                              SEQUENCE {
        systemFrameNumber                    BIT STRING (SIZE (6)),
        subCarrierSpacingCommon              ENUMERATED {scs15or60, scs30or120},
        ssb-SubcarrierOffset         INTEGER (0..15),
        dmrs-TypeA-Position                  ENUMERATED {pos2, pos3},
        pdcch-ConfigSIB1             INTEGER (0..255),
        cellBarred                   ENUMERATED {barred, notBarred},
        intraFreqReselection         ENUMERATED {allowed, notAllowed},
        spare                        BIT STRING (SIZE (1))
    }
```

Each IAB broadcasts its own MIB message. The MIB messages are RRC messages. Since the IABs may not have an RRC function, the MIB messages broadcast by the IABs are usually configured by the DgNB. However, in Fig.8, due to RLF (Radio Link Failure) between a terminal wireless function (Mobile Termina, IMT) of the IAB1 and the DgNB, the IAB1 may not acquire a new MIB message from the DgNB. Since the IAB1 knows that RLF has occurred, the IAB 1 may set an MIB message by itself to bar UE and lower-level IAB nodes from accessing the IAB1.

For example, the IAB1 sets a cellBarred parameter in the MIB message to {barred}, and then uses an NR technology in the related art to notify the UE. Specifically, the IAB 1 may broadcast the MIB message carrying the above cellBarred parameter, and then send a paging message to UEs in an idle or inactive state, to trigger these UEs to receive the broadcast MIB message, so that the UEs acquire the above cellBarred parameter, and then release a connection with the IAB1. For UEs in a connected state, the IAB1 may send an RRC connection reconfiguration message for switching partial bandwidth (BWP), and carry the above MIB message content (including the above cellBarred parameter) in the RRC connection reconfiguration message. Therefore, the UEs in the connected state acquire the above cellBarred parameter, and then release a connection with the IAB1.

Manner 2: UE recovers the link.

In this manner, the IAB1 sends to the IAB2 an indication message that an upper-level link fails. The IAB2 does not trigger link reselection after receiving the message, but continues to forward a lower-level IAB node the indication message that an upper-level link fails, and forwards it step by step until a last-level relay node on the wireless backhaul path. The last-level relay node may be such as the IAB6. The IAB1, the IAB2, and the IAB6 release the connections between themselves and all terminals. A specific release approach may be as follow.

A terminal connected to the relay node a parameter configuration message for adjusting a handover parameter is sent, where the parameter configuration message is configured to reduce a report threshold of an event-triggered measurement report; or, an MIB message is broadcasted, where the MIB message carries an MIB parameter of a cell which is barred to access to the relay node, a paging message is sent to a terminal in an idle or inactive state connected to the relay node, and an RRC reconfiguration message is sent to a terminal in a connection state connected to the relay node, where the RRC reconfiguration message carries an MIB parameter of a cell which is barred to access to the relay node.

Manner 3: a configuration is performed by the Donor gNB.

The two manners mentioned above may coexist in the network. For the manner 2, when the number of UEs is large, large signaling overhead will be brought to the network. For the manner 1, a large amount of forwarded data will be brought. The Donor gNB saves paths of all UEs. Therefore, the Donor gNB may decide whether to adopt the manner 1 or the manner 2 according to the number of UEs connected to a lower-level IAB node where a link failure occurs. How the Donor gNB acquires UEs connected to IAB nodes at each level is not specifically limited in embodiments of the present disclosure.

The link interruption processing methods in the embodiments of the present disclosure are described above. A device implementing the above methods will be further provided in the following.

Referring to Fig.11, an embodiment of the present disclosure provides a schematic structural diagram of a first wireless relay node 1100. The first wireless relay node is a relay node on a wireless backhaul path of a first terminal, and includes: a processor 1101 and a transceiver 1102, a storage 1103 and bus interface.

In an embodiment of the present disclosure, the first wireless relay node 1100 further includes: a program stored in the storage 1103 and executable by the processor 1101.

The processor 1101 is configured to read the program in the storage and execute the following process: releasing, after detecting that an upper-level radio link on the wireless backhaul path fails, a connection between the first relay node and a second relay node.

The second relay node is a lower-level relay node of the first relay node on the wireless backhaul path.

In Fig.11, a bus architecture may include any number of interconnected buses and bridges. Various circuits, specifically, one or more processors represented by the processor 1101 and a storage represented by the storage 1103, are linked together. The bus architecture may also link various other circuits such as peripherals, voltage regulators and power management circuits, which are well known in the art, and therefore a further description is omitted herein. The bus interface provides interfaces. The transceiver 1102 may be a plurality of elements, that is, includes a transmitter and a receiver, to provide units configured to communicate with various other devices over a transmission medium.

The processor 1101 is responsible for managing the bus architecture and general processing, and the storage 1103 may store data used by the processor 1101 when performing operations.

The processor 1101 is further configured to control the transceiver 1102 to send to the second relay node a first indication message indicating that the upper-level radio link fails, where the first indication message is configured to instruct the second relay node to initiate a link reselection; and release the connection between the first relay node and the second relay node during a process of the second relay node initiating the link reselection.

Optionally, the processor 1101 is further configured to, after detecting that the upper-level radio link fails, access the second relay node with the second relay node as an upper-level relay node.

Optionally, the processor 1101 is further configured to control the transceiver 1102 to send to the second relay node a parameter configuration message for adjusting a handover parameter, where the parameter configuration message is configured to reduce a report threshold of an event-triggered measurement report.

Optionally, the transceiver 1102 is further configured to, subsequent to sending the parameter configuration message, send, in a case that the second relay node does not perform a handover to the third relay node after a preset time, to the second relay node a second indication message indicating that the upper-level radio link fails, where the second indication message is configured to instruct the second relay node to adjust a handover parameter, to reduce a report threshold of an event-triggered measurement report of a fourth relay node, the fourth relay node is a lower-level relay node of the second relay node on the wireless backhaul path.

Optionally, the processor 1101 is further configured to access the second relay node with the second relay node as an upper-level relay node.

Optionally, the preset time is pre-configured by a donor base station, or determined by the first relay node according to a quality of service requirement of a service carried on the wireless backhaul path.

Optionally, the processor 1101 is further configured to control the transceiver 1102 to send a first Radio Resource Control (RRC) reconfiguration message to the second relay node, where the first RRC reconfiguration message carries a Master Information Block (MIB) parameter of a cell which is barred to access to the first relay node; and release the connection between the first relay node and the second relay node during a process of disconnecting the second relay node from the first relay node.

Optionally, the transceiver 1102 is further configured to broadcast, after detecting that the upper-level radio link fails, an MIB message, where the MIB message carries an MIB parameter of a cell which is barred to access to the first relay node; send a paging message to a terminal in an idle or inactive state connected to the first relay node; and send a second RRC reconfiguration message to a terminal in a connection state connected to the first relay node, where the second RRC reconfiguration message carries an MIB parameter of a cell which is barred to access to the first relay node.

Referring to Fig. 12, an embodiment of the present disclosure provides another schematic structural diagram of a first wireless relay node 120. The first relay node is a relay node on a wireless backhaul path of a first terminal. As shown in Fig. 12, the first wireless relay node 120 includes the following unit.

A release unit 121 is configured to release, after detecting that an upper-level radio link on the wireless backhaul path fails, a connection between the first relay node and a second relay node.

The second relay node is a lower-level relay node of the first relay node on the wireless backhaul path.

The release unit includes the following unit.

A first sending unit is configured to send to the second relay node a first indication message indicating that the upper-level radio link fails, where the first indication message is configured to instruct the second relay node to initiate a link reselection; release, by the first relay node, the connection between the first relay node and the second relay node during a process of the second relay node initiating the link reselection.

Optionally, the first relay node 120 further includes the following unit.

A first access management unit is configured to, after detecting that the upper-level radio link fails, access the second relay node with the second relay node as an upper-level relay node.

Optionally, the release unit includes the following unit.

A second sending unit is configured to send to the second relay node a parameter configuration message for adjusting a handover parameter, where the parameter configuration message is configured to reduce a report threshold of an event-triggered measurement report.

Optionally, the first relay node further includes a third sending unit configured to, subsequent to sending the parameter configuration message, send, in a case that the second relay node does not perform a handover to the third relay node after a preset time, to the second relay node a second indication message indicating that the upper-level radio link fails, where the second indication message is configured to instruct the second relay node to adjust a handover parameter, to reduce a report threshold of an event-triggered measurement report of a fourth relay node, the fourth relay node is a lower-level relay node of the second relay node on the wireless backhaul path.

Optionally, the first relay node further includes a second access management unit configured to access the second relay node with the second relay node as an upper-level relay node.

Optionally, the preset time is pre-configured by a donor base station, or determined by the first relay node according to a quality of service requirement of a service carried on the wireless backhaul path.

Optionally, the release unit includes the following unit.

A fourth sending unit is configured to send a first Radio Resource Control (RRC) reconfiguration message to the second relay node, where the first RRC reconfiguration message carries a Master Information Block (MIB) parameter of a cell which is barred to access to the first relay node; and release the connection between the first relay node and the second relay node during a process of disconnecting the second relay node from the first relay node.

Optionally, the first relay node further includes a third access management unit configured to broadcast, after detecting that the upper-level radio link fails, an MIB message, where the MIB message carries an MIB parameter of a cell which is barred to access to the first relay node; send a paging message to a terminal in an idle or inactive state connected to the first relay node; and send a second RRC reconfiguration message to a terminal in a connection state connected to the first relay node, where the second RRC reconfiguration message carries an MIB parameter of a cell which is barred to access to the first relay node.

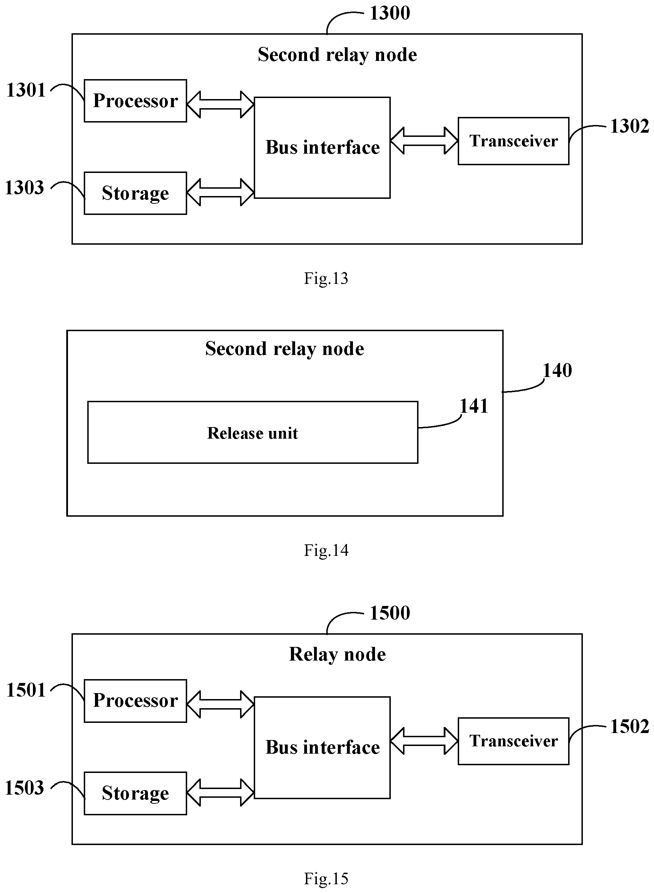

Referring to Fig. 13, an embodiment of the present disclosure provides a schematic structural diagram of a second wireless relay node 1300. The second relay node is a relay node on a wireless backhaul path of a first terminal, and includes: a processor 1301 and a transceiver 1302, a storage 1303 and bus interface.

In an embodiment of the present disclosure, the second wireless relay node 1300 further includes: a program stored in the storage 1303 and executable by the processor 1301.

The processor 1301 is configured to read the program in the storage and execute the following process: releasing, after a first relay node detects that an upper-level radio link on the wireless backhaul path fails, a connection between the second relay node and the first relay node.

The first relay node is an upper-level relay node of the second relay node on the wireless backhaul path.

In Fig. 13, a bus architecture may include any number of interconnected buses and bridges. Various circuits, specifically, one or more processors represented by the processor 1301 and a storage represented by the storage 1303, are linked together. The bus architecture may also link various other circuits such as peripherals, voltage regulators and power management circuits, which are well known in the art, and therefore a further description is omitted herein. The bus interface provides interfaces. The transceiver 1302 may be a plurality of elements, that is, includes a transmitter and a receiver, to provide units configured to communicate with various other devices over a transmission medium.

The processor 1301 is responsible for managing the bus architecture and general processing, and the storage 1303 may store data used by the processor 1301 when performing operations.

Optionally, the transceiver 1302 is configured to receive a first indication message sent by the first relay node indicating that the upper-level radio link fails, where the first indication message is configured to instruct the second relay node to initiate a link reselection.

The processor 1301 is further configured to initiate the link reselection according to the first indication message, and release the connection between the second relay node and the first relay node.

Optionally, the processor 1301 is further configured to, subsequent to receiving the first indication message, in a case that it is determined that there is no upper-level relay node capable of being accessed, trigger, by the second relay node, the first terminal to perform a cell reselection or a handover to another relay node in a case that the second relay node is an access node of the first terminal; send, by the second relay node in a case that the second relay node is not an access node of the first terminal, to a fourth relay node a third indication message indicating that the upper-level radio link fails, where the third indication message is configured to instruct the fourth relay node to initiate a link reselection.

Optionally, the processor 1301 is further used to periodically search for and update an available upper-level relay node capable of being accessed according to a preset search period; and determine, in a case that the available upper-level relay node is null or only the first relay node is included, that there is no upper-level relay node capable of being accessed after receiving the first indication message; or search for, by the second relay node, an upper-level relay node capable of being accessed after receiving the first indication message, and determine that there is no upper-level relay node capable of being accessed in a case that no relay node other than the first relay node is searched out.

Optionally, the transceiver 1302 is further configured to receive a parameter configuration message sent by the first relay node for adjusting a handover parameter, where the parameter configuration message is configured to reduce a report threshold of an event-triggered measurement report.

The processor 1301 is further configured to release the connection between the second relay node and the first relay node according to the parameter configuration message during a process of handover to a third relay node.

Optionally, the transceiver 1302 is further configured to, subsequent to receiving the parameter configuration message, in a case that the second relay node does not perform a handover to the third relay node after a preset time, receive a second indication message sent by the first relay node indicating that the upper-level radio link fails, where the second indication message is configured to instruct the second relay node to adjust a handover parameter; send to a fourth relay node a parameter configuration message for adjusting a handover parameter, where the parameter configuration message is configured to reduce a report threshold of an event-triggered measurement report of the fourth relay node.

Optionally, the transceiver 1302 is further configured to receive a first Radio Resource Control (RRC) reconfiguration message sent by the first relay node, where the first RRC reconfiguration message carries a Master Information Block (MIB) parameter of a cell which is barred to access to the first relay node.

The processor 1301 is further configured to release the connection with the first relay node according to the first RRC reconfiguration message during a process of disconnecting the connection with the first relay node.

Referring to Fig. 14, an embodiment of the present disclosure provides another schematic structural diagram of a second relay node 140. The second relay node is a relay node on a wireless backhaul path of a first terminal. As shown in Fig. 14, the second relay node 140 includes the following unit.

A release unit 141 is configured to release, after a first relay node detects that an upper-level radio link on the wireless backhaul path fails, a connection between the second relay node and the first relay node.

The first relay node is an upper-level relay node of the second relay node on the wireless backhaul path.

Optionally, the release unit 141 is further configured to receive a first indication message sent by the first relay node indicating that the upper-level radio link fails, where the first indication message is configured to instruct the second relay node to initiate a link reselection; initiate the link reselection according to the first indication message, and release the connection between the second relay node and the first relay node.

Optionally, the second relay node 140 also includes the following unit.

A reselection handover unit is configured to, subsequent to receiving the first indication message, in a case that it is determined that there is no upper-level relay node capable of being accessed, trigger, by the second relay node, the first terminal to perform a cell reselection or a handover to another relay node in a case that the second relay node is an access node of the first terminal; send, by the second relay node in a case that the second relay node is not an access node of the first terminal, to a fourth relay node a third indication message indicating that the upper-level radio link fails, where the third indication message is configured to instruct the fourth relay node to initiate a link reselection.

Optionally, the second relay node 140 also includes the following unit.

A determination unit is configured to periodically search for and update an available upper-level relay node capable of being accessed according to a preset search period; and determine, in a case that the available upper-level relay node is null or only the first relay node is included, that there is no upper-level relay node capable of being accessed after receiving the first indication message; or search for an upper-level relay node capable of being accessed after receiving the first indication message, and determine that there is no upper-level relay node capable of being accessed in a case that no relay node other than the first relay node is searched out.

Optionally, the release unit is further configured to receive a parameter configuration message sent by the first relay node for adjusting a handover parameter, where the parameter configuration message is configured to reduce a report threshold of an event-triggered measurement report; release the connection between the second relay node and the first relay node according to the parameter configuration message during a process of handover to a third relay node.

Optionally, the second relay node 140 also includes the following unit.

An adjustment unit is configured to, after the second relay node receives the parameter configuration message, in a case that the second relay node does not perform a handover to the third relay node after a preset time, receive a second indication message sent by the first relay node indicating that the upper-level radio link fails, where the second indication message is configured to instruct the second relay node to adjust a handover parameter; send to a fourth relay node a parameter configuration message for adjusting a handover parameter, where the parameter configuration message is configured to reduce a report threshold of an event-triggered measurement report of the fourth relay node.

Optionally, the release unit is further configured to receive a first Radio Resource Control (RRC) reconfiguration message sent by the first relay node, where the first RRC reconfiguration message carries a Master Information Block (MIB) parameter of a cell which is barred to access to the first relay node; release the connection with the first relay node according to the first RRC reconfiguration message during a process of disconnecting the connection with the first relay node.

Referring to Fig. 15, an embodiment of the present disclosure provides a schematic structural diagram of a relay node 1500. The relay node is a relay node on a wireless backhaul path of a first terminal, and includes: a processor 1501 and a transceiver 1502, a storage 1503 and bus interface.

In an embodiment of the present disclosure, the relay node 1500 further includes: a program stored in the storage 1503 and executable by the processor 1501.

The processor 1501 is configured to read the program in the storage and execute the following process: releasing, after an upper-level radio link on the wireless backhaul path fails, connections between the relay node and all terminals.

The transceiver is configured to send, in a case that there is a lower-level relay node of the relay node on the wireless backhaul path, to the lower-level relay node an indication message indicating that the upper-level radio link fails.

In Fig.15, a bus architecture may include any number of interconnected buses and bridges. Various circuits, specifically, one or more processors represented by the processor 1501 and a storage represented by the storage 1503, are linked together. The bus architecture may also link various other circuits such as peripherals, voltage regulators and power management circuits, which are well known in the art, and therefore a further description is omitted herein. The bus interface provides interfaces. The transceiver 1502 may be a plurality of elements, that is, includes a transmitter and a receiver, to provide units configured to communicate with various other devices over a transmission medium.

The processor 1501 is responsible for managing the bus architecture and general processing, and the storage 1503 may store data used by the processor 1501 when performing operations.

Optionally, the processor 1501 is configured to detect, prior to the releasing the connections between the relay node and all terminals, that a radio link between the relay node and an upper-level node fails; or, receive an indication message sent by an upper-level relay node indicating that the upper-level radio link fails.

Optionally, the processor 1501 is further configured to control the transceiver to send to a terminal connected to the relay node a parameter configuration message for adjusting a handover parameter, where the parameter configuration message is configured to reduce a report threshold of an event-triggered measurement report; or, broadcast a Master Information Block (MIB) message, where the MIB message carries an MIB parameter of a cell which is barred to access to the relay node; send a paging message to a terminal in an idle or inactive state connected to the relay node; and send a Radio Resource Control (RRC) reconfiguration message to a terminal in a connection state connected to the relay node, where the RRC reconfiguration message carries an MIB parameter of a cell which is barred to access to the relay node.

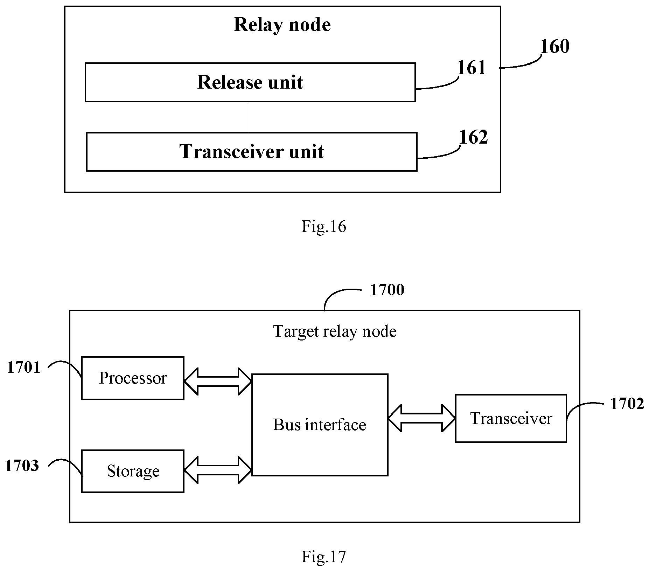

Referring to Fig.16, an embodiment of the present disclosure provides another schematic structural diagram of a relay node 160. The relay node is a relay node on a wireless backhaul path of a first terminal. As shown in Fig. 16, the relay node 160 includes the following units. This embodiment is not covered by the amended set of claims, and useful for illustration.

A release unit 161 is configured to release, after an upper-level radio link on the wireless backhaul path fails, connections between the relay node and all terminals.

A transceiver unit 162 is configured to send, in a case that there is a lower-level relay node of the relay node on the wireless backhaul path, to the lower-level relay node an indication message indicating that the upper-level radio link fails.

Optionally, before the release unit releases the connections between the relay node and all terminals, the transceiver unit 162 is configured to detect that a radio link between the relay node and an upper-level node fails; or, receive an indication message sent by an upper-level relay node indicating that the upper-level radio link fails.

Optionally, the transceiver unit 162 is further configured to send to a terminal connected to the relay node a parameter configuration message for adjusting a handover parameter, where the parameter configuration message is configured to reduce a report threshold of an event-triggered measurement report; or, broadcast a Master Information Block (MIB) message, where the MIB message carries an MIB parameter of a cell which is barred to access to the relay node; send a paging message to a terminal in an idle or inactive state connected to the relay node; and send a Radio Resource Control (RRC) reconfiguration message to a terminal in a connection state connected to the relay node, where the RRC reconfiguration message carries an MIB parameter of a cell which is barred to access to the relay node.

Referring to Fig. 17, an embodiment of the present disclosure provides a schematic structural diagram of a target relay node 1700. The target relay node is a relay node on a wireless backhaul path of a first terminal, and includes: a processor 1701 and a transceiver 1702, a storage 1703 and bus interface.

In an embodiment of the present disclosure, the target relay node 1700 further includes: a program stored in the storage 1703 and executable by the processor 1701.

The processor 1701 is configured to read the program in the storage and execute the following process: performing a corresponding processing according to a pre-configured processing strategy and a positional relationship between the target relay node and a failed link where a link failure occurs.

In a case that the target relay node is configured with a first processing strategy, and the target relay node is a relay node at a first end of the failed link, the first end is an end of the failed link close to a first terminal side, and the target relay node releases, after detecting that an upper-level radio link on the wireless backhaul path fails, a connection between the target relay node and a second relay node; where the second relay node is a lower-relay node of the target relay node on the wireless backhaul path.

In a case that the target relay node is configured with a first processing strategy, and the target relay node is a lower-level relay node of a relay node at a first end of the failed link, the target relay node releases a connection between the target relay node and a first relay node; where the first relay node is an upper-relay node of the target relay node on the wireless backhaul path.

In a case that the target relay node is configured with a second processing strategy, and the failed link is an upper-level link of the target relay node, after an upper-level radio link on the wireless backhaul path fails, the relay node releases connections between the target relay node and all terminals, and sends, in a case that there is a lower-level relay node of the target relay node on the wireless backhaul path, to the lower-level relay node an indication message indicating that the upper-level radio link fails.

In Fig.17, a bus architecture may include any number of interconnected buses and bridges. Various circuits, specifically, one or more processors represented by the processor 1701 and a storage represented by the storage 1703, are linked together. The bus architecture may also link various other circuits such as peripherals, voltage regulators and power management circuits, which are well known in the art, and therefore a further description is omitted herein. The bus interface provides interfaces. The transceiver 1702 may be a plurality of elements, that is, includes a transmitter and a receiver, to provide units configured to communicate with various other devices over a transmission medium.

The processor 1701 is responsible for managing the bus architecture and general processing, and the storage 1703 may store data used by the processor 1701 when performing operations.

Optionally, the processor 1701 is further configured to perform the steps executed by the processor 1101 shown in Fig.11 when the target relay node is configured with the first processing strategy and the target relay node is a relay node at the first end of the failed link.

Optionally, the processor 1701 is further configured to perform the steps executed by the processor 1301 shown in Fig.13 when the target relay node is configured with the first processing strategy, and the target relay node is a lower-level relay node of a relay node at the first end of the failed link.

Optionally, the processor 1701 is further configured to perform the steps executed by the processor 1501 shown in Fig.15 when the target relay node is configured with the second processing strategy, and the failed link is an upper-level link of the target relay node.

Steps of the method or algorithm described in connection with the disclosure of the present disclosure may be implemented in a hardware manner, or may be implemented in a manner in which a processor executes software instructions. The software instructions may be composed of corresponding software modules, and the software modules may be stored in a RAM, a flash memory, a ROM, an EPROM, an EEPROM, a register, a hard disk, a mobile hard disk, a read-only optical disk, or any other form of storage medium known in the art. An exemplary storage medium is coupled to the processor, so that the processor may read information from the storage medium and may write information to the storage medium. Of course, the storage medium may also be an integral part of the processor. The processor and the storage medium may be located in an ASIC. In addition, the ASIC may be located in an interface device of a core network. Of course, the processor and the storage medium may also exist as discrete components in the interface device of the core network.

Those skilled in the art should be aware that in one or more of the above examples, functions described in the present disclosure may be implemented by hardware, software, firmware, or any combination thereof. When implemented by software, these functions may be stored in a computer-readable medium or transmitted as one or more instructions or codes on a computer-readable medium. The computer-readable medium includes a computer storage medium and a communication medium, where the communication medium includes any medium that facilitates transfer of a computer program from one place to another. The storage medium may be any available medium that may be accessed by a general-purpose computer or a special-purpose computer.

The specific implementations described above are further descriptions of the objectives, technical solutions, and beneficial effects of the present invention in detail. It should be understood that the above descriptions are only specific implementations of the present disclosure, and are not used to limit scope of protection of the present disclosure.

Those skilled in the art will appreciate that an embodiment of the present disclosure may be provided as a method, a system, or a program product. Accordingly, an embodiment of the present disclosure may take the form of an entirely hardware embodiment, an entirely software embodiment, or an embodiment combining software and hardware aspects. Moreover, an embodiment of the present disclosure may use a form of a product of programs to be carried out on one or more computer usable storage medium (including but not limit to a disk memory, a CD-ROM, an optical memory etc.) including programming codes that may be executed by computers.

An embodiment of the present disclosure is described with reference to flowcharts and/or block diagrams of methods, devices (systems) and program products according to an embodiment of the disclosure. It will be understood that each flow and/or block of flowcharts and/or block diagrams and a combination of flows and/or blocks in the flowcharts and/or block diagrams may be implemented by program instructions. These program instructions may be provided to a processor of a general purpose computer, a special purpose computer, an embedded processor or other programmable data processing device to produce a machine, so that the instructions executed by a processor of a computer or other programmable data processing device are cause to produce a device for implementing the functions designated in one or more flows of the flowcharts or in one or more blocks of the block diagrams.

The program instructions may also be stored in a computer readable storage that may direct a computer or other programmable data processing device to operate in a particular manner, such that instructions stored in the computer readable storage produce an article of manufacture including the instruction device, and the instruction device implements the functions designated in one or more flows of the flowcharts or in one or more blocks of the block diagrams.

These program instructions may also be loaded onto a computer or other programmable data processing device such that a series of operational steps are performed on the computer or other programmable device to produce computer-implemented processing, such that the instructions executed on a computer or other programmable device provide steps for implementing the functions designated in one or more flows of the flowcharts or in one or more blocks of the block diagrams.

It is to be understood that the embodiments described in embodiments of the present disclosure can be implemented in hardware, software, firmware, middleware, microcode, or any combination thereof. For hardware implementation, processing units may be implemented in one or more application specific integrated circuits (ASIC), digital signal processors (DSP), DSP devices (DSPD), programmable logic devices (PLD), field programmable gate arrays (FPGA), general purpose processors, controllers, microcontrollers, microprocessors, other electronic units configured to perform the function described in the present disclosure or a combination thereof.

For software implementation, the techniques described in an embodiment of the present disclosure can be implemented by modules (e.g., procedures, functions, etc.) that perform the functions described in an embodiment of the present disclosure. The software code can be stored in the storage and executed by the processor. The storage can be implemented within the processor or external to the processor. Obviously, those skilled in the art may make various changes and modifications to embodiments of the present disclosure without departing from the scope of the present disclosure. The invention is defined by the appended independent claims.

**Claims**

1. A link interruption processing method in a relay network, applied to a first relay node on a wireless backhaul path of a first terminal, comprising:

   releasing (51), by the first relay node after detecting that an upper-level radio link on the wireless backhaul path fails, a connection between the first relay node and a second relay node;
   wherein the second relay node is a lower-level relay node of the first relay node on the wireless backhaul path, wherein the releasing (51) the connection between the first relay node and the second relay node comprises:

      sending, by the first relay node, to the second relay node a first indication message indicating that the upper-level radio link fails, wherein the first indication message is configured to instruct the second relay node to initiate a link reselection;
      releasing, by the first relay node, the connection between the first relay node and the second relay node during a process of the second relay node initiating the link reselection,
      **characterized in that** the method further comprises: after detecting that the upper-level radio link fails, accessing, by the first relay node, the second relay node with taking the second relay node as an upper-level relay node.

2. The method according to claim 1, wherein the releasing (51) the connection between the first relay node and the second relay node further comprises:

   sending, by the first relay node, to the second relay node a parameter configuration message for adjusting a handover parameter, wherein the parameter configuration message is configured to reduce a report threshold of an event-triggered measurement report;
   releasing, by the first relay node, the connection between the first relay node and the second relay node during a process of the second relay node performing handover to a third relay node.

3. The method according to claim 2, wherein, subsequent to sending the parameter configuration message, the method comprises: sending, in a case that the second relay node does not perform a handover to the third relay node after a preset time, to the second relay node a second indication message indicating that the upper-level radio link fails, wherein the second indication message is configured to instruct the second relay node to adjust a handover parameter, to reduce a report threshold of an event-triggered measurement report of a fourth relay node, the fourth relay node is a lower-level relay node of the second relay node on the wireless backhaul path.

4. The method according to claim 3, wherein the preset time is pre-configured by a donor base station, or determined by the first relay node according to a quality of service requirement of a service carried on the wireless backhaul path.

5. The method according to claim 1, wherein the releasing (51) the connection between the first relay node and the second relay node further comprises:

   sending, by the first relay node, a first Radio Resource Control, RRC, reconfiguration message to the second relay node, wherein the first RRC reconfiguration message carries a Master Information Block, MIB, parameter of a cell which is barred to access to the first relay node;
   releasing, by the first relay node, the connection between the first relay node and the second relay node during a process of disconnecting the second relay node from the first relay node.

6. The method according to claim 5, further comprising:
   broadcasting, by the first relay node after detecting that the upper-level radio link fails, an MIB message, wherein the MIB message carries an MIB parameter of a cell which is barred to access to the first relay node; sending a paging message to a terminal in an idle or inactive state connected to the first relay node; and sending a second RRC reconfiguration message to a terminal in a connection state connected to the first relay node, wherein the second RRC reconfiguration message carries an MIB parameter of a cell which is barred to access to the first relay node.

7. A first relay node (120), wherein the first relay node is a relay node on a wireless backhaul path of a first terminal, **characterized in that** the first relay node comprises:

a release unit (121), configured to release, after detecting that an upper-level radio link on the wireless backhaul path fails, a connection between the first relay node and a second relay node;

wherein, the second relay node is a lower-level relay node of the first relay node on the wireless backhaul path, wherein the release unit (121) is further configured to:

send to the second relay node a first indication message indicating that the upper-level radio link fails, wherein the first indication message is configured to instruct the second relay node to initiate a link reselection;

release the connection between the first relay node and the second relay node during a process of the second relay node initiating the link reselection,

**characterized in that** the first relay node (120) further comprises an accessing unit configured to access the second relay node with taking the second relay node as an upper-level relay node, after detecting that the upper-level radio link fails.

8. The first relay node (120) according to claim 7, wherein the release unit (121) is further configured to:

send to the second relay node a parameter configuration message for adjusting a handover parameter, wherein the parameter configuration message is configured to reduce a report threshold of an event-triggered measurement report;

release the connection between the first relay node and the second relay node during a process of the second relay node performing handover to a third relay node.

9. The first relay node (120) according to claim 8, wherein, subsequent to sending the parameter configuration message, the release unit (121) is further configured to: send, in a case that the second relay node does not perform a handover to the third relay node after a preset time, to the second relay node a second indication message indicating that the upper-level radio link fails, wherein the second indication message is configured to instruct the second relay node to adjust a handover parameter, to reduce a report threshold of an event-triggered measurement report of a fourth relay node, the fourth relay node is a lower-level relay node of the second relay node on the wireless backhaul path.

10. The first relay node (120) according to claim 9, wherein the preset time is pre-configured by a donor base station, or determined by the first relay node according to a quality of service requirement of a service carried on the wireless backhaul path.

11. The first relay node (120) according to claim 7, wherein the release unit (121) is further configured to:

send a first Radio Resource Control, RRC, reconfiguration message to the second relay node, wherein the first RRC reconfiguration message carries a Master Information Block, MIB, parameter of a cell which is barred to access to the first relay node;

release the connection between the first relay node and the second relay node during a process of disconnecting the second relay node from the first relay node.

12. The first relay node (120) according to claim 7, further comprising a third access management unit configured to broadcast an MIB message after detecting that the upper-level radio link fails, wherein the MIB message carries an MIB parameter of a cell which is barred to access to the first relay node; sending a paging message to a terminal in an idle or inactive state connected to the first relay node; and sending a second RRC reconfiguration message to a terminal in a connection state connected to the first relay node, wherein the second RRC reconfiguration message carries an MIB parameter of a cell which is barred to access to the first relay node.

13. A computer readable storage medium storing therein a computer program, **characterized in that** the computer program is configured to be executed by a processor to perform the steps of the link interruption processing method according to any one of claims 1 to 6.

**Patentansprüche**

1. Verfahren zur Verarbeitung von Verbindungsunterbrechungen in einem Relais-Netzwerk, das bei einem ersten Relais-Knoten auf einem drahtlosen Backhaul-Pfad eines ersten Endgeräts angewendet wird, wobei das Verfahren umfasst:

   Freigeben (51), mittels des ersten Relais-Knotens, nachdem detektiert wird, dass eine übergeordnete Funkverbindung auf dem drahtlosen Backhaul-Pfad fehlschlägt, einer Verbindung zwischen dem ersten Relais-Knoten und einem zweiten Relais-Knoten;
   wobei der zweite Relais-Knoten ein untergeordneter Relais-Knoten des ersten Relais-Knotens auf dem drahtlosen Backhaul-Pfad ist,
   wobei das Freigeben (51) der Verbindung zwischen dem ersten Relais-Knoten und dem zweiten Relais-Knoten umfasst:

   Senden, mittels des ersten Relais-Knotens, einer ersten Anzeigenachricht, die anzeigt, dass die übergeordnete Funkverbindung fehlschlägt, an den zweiten Relais-Knoten, wobei die erste Anzeigenachricht dazu dient, den zweiten Relais-Knoten anzuweisen, eine Verbindungsneuwahl zu initiieren;
   Freigeben, mittels des ersten Relais-Knotens, der Verbindung zwischen dem ersten Relais-Knoten und dem zweiten Relais-Knoten während ein Prozess des zweiten Relais-Knotens die Verbindungsneuwahl initiiert,
   **dadurch gekennzeichnet, dass** das Verfahren ferner umfasst: nachdem detektiert wird, dass die übergeordnete Funkverbindung fehlschlägt, Zugreifen, mittels des ersten Relais-Knotens, auf den zweiten Relais-Knoten, indem der zweite Relais-Knoten als ein übergeordneter Relais-Knoten verwendet wird.

2. Verfahren nach Anspruch 1, wobei das Freigeben (51) der Verbindung zwischen dem ersten Relais-Knoten und dem zweiten Relais-Knoten ferner umfasst:

   Senden, mittels des ersten Relais-Knotens, einer Parameterkonfigurationsnachricht zum Einstellen eines Handover-Parameters an den zweiten Relais-Knoten, wobei die Parameterkonfigurationsnachricht dazu dient, einen Berichtsschwellenwert eines ereignisgesteuerten Messberichts zu reduzieren;
   Freigeben, mittels des ersten Relais-Knotens, der Verbindung zwischen dem ersten Relais-Knoten und dem zweiten Relais-Knoten während ein Prozess des zweiten Relais-Knotens ein Handover an einen dritten Relais-Knoten durchführt.

3. Verfahren nach Anspruch 2, wobei, nach dem Senden der Parameterkonfigurationsnachricht, das Verfahren umfasst: für den Fall, dass der zweite Relais-Knoten nach einer voreingestellten Zeit kein Handover an den dritten Relais-Knoten durchführt, Senden einer zweiten Anzeigenachricht, die anzeigt, dass die übergeordnete Funkverbindung fehlschlägt, an den zweiten Relais-Knoten, wobei die zweite Anzeigenachricht dazu dient, den zweiten Relais-Knoten anzuweisen, einen Handover-Parameter einzustellen, einen Berichtsschwellenwert eines ereignisgesteuerten Messberichts eines vierten Relais-Knotens zu reduzieren, wobei der vierte Relais-Knoten ein untergeordneter Relais-Knoten des zweiten Relais-Knotens auf dem drahtlosen Backhaul-Pfad ist.

4. Verfahren nach Anspruch 3, wobei die voreingestellte Zeit von einer Geber-Basisstation vorkonfiguriert wird oder von dem ersten Relais-Knoten entsprechend einer Dienstqualitätsanforderung eines auf dem drahtlosen Backhaul-Pfad getragenen Dienstes bestimmt wird.

5. Verfahren nach Anspruch 1, wobei das Freigeben (51) der Verbindung zwischen dem ersten Relais-Knoten und dem zweiten Relais-Knoten ferner umfasst:

   Senden, mittels des ersten Relais-Knotens, einer ersten Radio-Resource-Control-, RRC, Rekonfigurationsnachricht an den zweiten Relais-Knoten, wobei die erste RRC-Rekonfigurationsnachricht einen Master-Information-Block-, MIB, Parameter einer Zelle trägt, die für den Zugriff auf den ersten Relais-Knoten gesperrt ist;
   Freigeben, mittels des ersten Relais-Knotens, der Verbindung zwischen dem ersten Relais-Knoten und dem zweiten Relais-Knoten während eines Prozesses, indem der zweite Relais-Knoten von dem ersten Relais-Knoten getrennt wird.

6.  Verfahren nach Anspruch 5, das ferner umfasst:
    Durchführen eines Broadcastings, mittels des ersten Relais-Knotens, nachdem detektiert wird, dass die übergeordnete Funkverbindung fehlschlägt, einer MIB-Nachricht, wobei die MIB-Nachricht einen MIB-Parameter einer Zelle trägt, die für den Zugriff auf den ersten Relais-Knoten gesperrt ist; Senden einer Paging-Nachricht an ein Endgerät in einem Ruhezustand oder einem inaktiven Zustand, das mit dem ersten Relais-Knoten verbunden ist; und Senden einer zweiten RRC-Rekonfigurationsnachricht an ein Endgerät in einem Verbindungszustand, das mit dem ersten Relais-Knoten verbunden ist, wobei die zweite RRC-Rekonfigurationsnachricht einen MIB-Parameter einer Zelle trägt, die für den Zugriff auf den ersten Relais-Knoten gesperrt ist.

7.  Erster Relais-Knoten (120), wobei der erste Relais-Knoten ein Relais-Knoten auf einem drahtlosen Backhaul-Pfad eines ersten Endgeräts ist, **dadurch gekennzeichnet, dass** der erste Relais-Knoten aufweist:

    eine Freigabeeinheit (121), die dazu ausgebildet ist, nachdem detektiert wird, dass eine übergeordnete Funkverbindung auf dem drahtlosen Backhaul-Pfad fehlschlägt, eine Verbindung zwischen dem ersten Relais-Knoten und einem zweiten Relais-Knoten freizugeben;
    wobei der zweit Relais-Knoten ein untergeordneter Relais-Knoten des ersten Relais-Knotens auf dem drahtlosen Backhaul-Pfad ist,
    wobei die Freigabeeinheit (121) ferner für Folgendes ausgebildet ist:

    Senden einer ersten Anzeigenachricht, die anzeigt, dass die übergeordnete Funkverbindung fehlschlägt, an den zweiten Relais-Knoten, wobei die erste Anzeigenachricht dazu dient, den zweiten Relais-Knoten anzuweisen, eine Verbindungsneuwahl zu initiieren;
    Freigeben der Verbindung zwischen dem ersten Relais-Knoten und dem zweiten Relais-Knoten während ein Prozess des zweiten Relais-Knotens die Verbindungsneuwahl initiiert,
    **dadurch gekennzeichnet, dass** der erste Relais-Knoten (120) ferner eine Zugriffseinheit aufweist, die dazu ausgebildet ist, auf den zweiten Relais-Knoten zuzugreifen, indem der zweite Relais-Knoten als ein übergeordneter Relais-Knoten verwendet wird, nachdem detektiert wird, dass die übergeordnete Funkverbindung fehlschlägt.

8.  Erster Relais-Knoten (120) nach Anspruch 7, wobei die Freigabeeinheit (121) ferner für Folgendes ausgebildet ist:

    Senden einer Parameterkonfigurationsnachricht zum Einstellen eines Handover-Parameters an den zweiten Relais-Knoten, wobei die Parameterkonfigurationsnachricht dazu dient, einen Berichtsschwellenwert eines ereignisgesteuerten Messberichts zu reduzieren;
    Freigeben der Verbindung zwischen dem ersten Relais-Knoten und dem zweiten Relais-Knoten während ein Prozess des zweiten Relais-Knotens ein Handover an einen dritten Relais-Knoten durchführt.

9.  Erster Relais-Knoten (120) nach Anspruch 8, wobei, nach dem Senden der Parameterkonfigurationsnachricht, die Freigabeeinheit (121) ferner für Folgendes ausgebildet ist: für den Fall, dass der zweite Relais-Knoten nach einer voreingestellten Zeit kein Handover an den dritten Relais-Knoten durchführt, Senden einer zweiten Anzeigenachricht, die anzeigt, dass die übergeordnete Funkverbindung fehlschlägt, an den zweiten Relais-Knoten, wobei die zweite Anzeigenachricht dazu dient, den zweiten Relais-Knoten anzuweisen, einen Handover-Parameter einzustellen, einen Berichtsschwellenwert eines ereignisgesteuerten Messberichts eines vierten Relais-Knotens zu reduzieren, wobei der vierte Relais-Knoten ein untergeordneter Relais-Knoten des zweiten Relais-Knotens auf dem drahtlosen Backhaul-Pfad ist.

10. Erster Relais-Knoten (120) nach Anspruch 9, wobei die voreingestellte Zeit von einer Geber-Basisstation vorkonfiguriert wird oder von dem ersten Relais-Knoten entsprechend einer Dienstqualitätsanforderung eines auf dem drahtlosen Backhaul-Pfad getragenen Dienstes bestimmt wird.

11. Erster Relais-Knoten (120) nach Anspruch 7, wobei die Freigabeeinheit (121) ferner für Folgendes ausgebildet ist:

    Senden einer ersten Radio-Resource-Control-, RRC, Rekonfigurationsnachricht an den zweiten Relais-Knoten, wobei die erste RRC-Rekonfigurationsnachricht einen Master-Information-Block-, MIB, Parameter einer Zelle trägt, die für den Zugriff auf den ersten Relais-Knoten gesperrt ist;
    Freigeben der Verbindung zwischen dem ersten Relais-Knoten und dem zweiten Relais-Knoten während eines Prozesses, indem der zweite Relais-Knoten von dem ersten Relais-Knoten getrennt wird.

12. Erster Relais-Knoten (120) nach Anspruch 7, der ferner eine dritte Zugriffsmanagementeinheit aufweist, die dazu ausgebildet ist, ein Broadcasting einer MIB-Nachricht durchzuführen, nachdem detektiert wird, dass die übergeordnete Funkverbindung fehlschlägt, wobei die MIB-Nachricht einen MIB-Parameter einer Zelle trägt, die für den Zugriff auf den ersten Relais-Knoten gesperrt ist; Senden einer Paging-Nachricht an ein Endgerät in einem Ruhezustand oder einem inaktiven Zustand, das mit dem ersten Relais-Knoten verbunden ist; und Senden einer zweiten RRC-Rekonfigurationsnachricht an ein Endgerät in einem Verbindungszustand, das mit dem ersten Relais-Knoten verbunden ist, wobei die zweite RRC-Rekonfigurationsnachricht einen MIB-Parameter einer Zelle trägt, die für den Zugriff auf den ersten Relais-Knoten gesperrt ist.

13. Computerlesbares Speichermedium, auf dem ein Computerprogramm gespeichert ist, **dadurch gekennzeichnet, dass** das Computerprogramm dazu ausgebildet ist, von einem Prozessor ausgeführt zu werden, um die Schritte des Verfahrens zur Verarbeitung von Verbindungsunterbrechungen nach einem der Ansprüche 1 bis 6 durchzuführen.

**Revendications**

1. Procédé de traitement d'interruption de liaison dans un réseau relais, appliqué à un premier noeud relais sur un trajet de liaison terrestre sans fil d'un premier terminal, comprenant :

   la libération (51), par le premier noeud relais après la détection du fait qu'une liaison radio de niveau supérieur sur le trajet de liaison terrestre sans fil échoue, d'une connexion entre le premier noeud relais et un deuxième noeud relais ;
   dans lequel le deuxième noeud relais est un noeud relais de niveau inférieur du premier noeud relais sur le trajet de liaison terrestre sans fil,
   dans lequel la libération (51) de la connexion entre le premier noeud relais et le deuxième noeud relais comprend :

      l'envoi, par le premier noeud relais, au deuxième noeud relais d'un premier message d'indication indiquant que la liaison radio de niveau supérieur échoue, le premier message d'indication étant configuré pour ordonner au deuxième noeud relais de lancer une nouvelle sélection de liaison ;
      la libération, par le premier noeud relais, de la connexion entre le premier noeud relais et le deuxième noeud relais pendant un processus du deuxième noeud relais lançant la nouvelle sélection de liaison,
      **caractérisé en ce que** le procédé comprend en outre : après la détection du fait que la liaison radio de niveau supérieur échoue, l'accès, par le premier noeud relais, au deuxième noeud relais avec la prise du deuxième noeud relais en tant que noeud relais de niveau supérieur.

2. Procédé selon la revendication 1, dans lequel la libération (51) de la connexion entre le premier noeud relais et le deuxième noeud relais comprend en outre :

   l'envoi, par le premier noeud relais, au deuxième noeud relais d'un message de configuration de paramètre pour ajuster un paramètre de transfert, le message de configuration de paramètre étant configuré pour réduire un seuil de rapport d'un rapport de mesure déclenché par événement ;
   la libération, par le premier noeud relais, de la connexion entre le premier noeud relais et le deuxième noeud relais pendant un processus du deuxième noeud relais effectuant un transfert vers un troisième noeud relais.

3. Procédé selon la revendication 2, dans lequel, après l'envoi du message de configuration de paramètre, le procédé comprend : l'envoi, dans un cas où le deuxième noeud relais n'effectue pas un transfert vers le troisième noeud relais après un temps prédéfini, au deuxième noeud relais d'un second message d'indication indiquant que la liaison radio de niveau supérieur échoue, dans lequel le second message d'indication est configuré pour ordonner au deuxième noeud relais d'ajuster un paramètre de transfert, pour réduire un seuil de rapport d'un rapport de mesure déclenché par événement d'un quatrième noeud relais, le quatrième noeud relais est un noeud relais à niveau inférieur du deuxième noeud relais sur le trajet de liaison terrestre sans fil.

4. Procédé selon la revendication 3, dans lequel le temps prédéfini est pré-configuré par une station de base donneuse, ou déterminé par le premier noeud relais selon une exigence de qualité de service d'un service transporté sur le trajet de liaison terrestre sans fil.

**5.** Procédé selon la revendication 1, dans lequel la libération (51) de la connexion entre le premier noeud relais et le deuxième noeud relais comprend en outre :

l'envoi, par le premier noeud relais, d'un premier message de reconfiguration de commande de ressource radio, RRC, au deuxième noeud relais, dans lequel le premier message de reconfiguration RRC transporte un paramètre de bloc d'informations maître, MIB, d'une cellule dont l'accès est interdit au premier noeud relais ;
la libération, par le premier noeud relais, de la connexion entre le premier noeud relais et le deuxième noeud relais pendant un processus de déconnexion du deuxième noeud relais du premier noeud relais.

**6.** Procédé selon la revendication 5, comprenant en outre :
la diffusion, par le premier noeud relais après la détection du fait que la liaison radio de niveau supérieur échoue, d'un message MIB, dans lequel le message MIB transporte un paramètre MIB d'une cellule dont l'accès est interdit au premier noeud relais ; l'envoi d'un message de radiomessagerie à un terminal dans un état au repos ou inactif connecté au premier noeud relais ; et l'envoi d'un second message de reconfiguration RRC à un terminal dans un état de connexion connecté au premier noeud relais, dans lequel le second message de reconfiguration RRC transporte un paramètre MIB d'une cellule dont l'accès est interdit au premier noeud relais.

**7.** Premier noeud relais (120), dans lequel le premier noeud relais est un noeud relais sur un trajet de liaison terrestre sans fil d'un premier terminal, **caractérisé en ce que** le premier noeud relais comprend :

une unité de libération (121), configurée pour libérer, après la détection du fait qu'une liaison radio de niveau supérieur sur le trajet de liaison terrestre sans fil échoue, une connexion entre le premier noeud relais et un deuxième noeud relais ;
le deuxième noeud relais étant un noeud de relais de niveau inférieur du premier noeud relais sur le trajet de liaison terrestre sans fil,
l'unité de libération (121) étant configurée en outre pour :

envoyer au deuxième noeud relais un premier message d'indication indiquant que la liaison radio de niveau supérieur échoue, le premier message d'indication étant configuré pour ordonner au deuxième noeud relais de lancer une nouvelle sélection de liaison ;
libérer la connexion entre le premier noeud relais et le deuxième noeud relais pendant un processus du deuxième noeud relais lançant la nouvelle sélection de liaison,
**caractérisé en ce que** le premier noeud relais (120) comprend en outre une unité d'accès configurée pour accéder au deuxième noeud relais avec la prise du deuxième noeud relais en tant que noeud relais de niveau supérieur, après la détection du fait que la liaison radio de niveau supérieur échoue.

**8.** Premier noeud relais (120) selon la revendication 7, dans lequel l'unité de libération (121) est en outre configurée pour :

envoyer au deuxième noeud relais un message de configuration de paramètre pour ajuster un paramètre de transfert, dans lequel le message de configuration de paramètre est configuré pour réduire un seuil de rapport d'un rapport de mesure déclenché par événement ;
libérer la connexion entre le premier noeud relais et le deuxième noeud relais pendant un processus du deuxième noeud relais effectuant un transfert vers un troisième noeud relais.

**9.** Premier noeud relais (120) selon la revendication 8, dans lequel, après l'envoi du message de configuration de paramètre, l'unité de libération (121) est en outre configurée pour : envoyer, dans un cas où le deuxième noeud relais n'effectue pas un transfert vers le troisième noeud relais après un temps prédéfini, au deuxième noeud relais un second message d'indication indiquant que la liaison radio de niveau supérieur échoue, le second message d'indication étant configuré pour ordonner au deuxième noeud relais d'ajuster un paramètre de transfert, pour réduire un seuil de rapport d'un rapport de mesure déclenché par événement d'un quatrième noeud relais, le quatrième noeud relais étant un noeud relais de niveau inférieur du deuxième noeud relais sur le trajet de liaison terrestre sans fil.

**10.** Premier noeud relais (120) selon la revendication 9, dans lequel le temps prédéfini est pré-configuré par une station de base donneuse, ou déterminé par le premier noeud relais selon une exigence de qualité de service d'un service transporté sur le trajet de liaison terrestre sans fil.

**11.** Premier noeud relais (120) selon la revendication 7, dans lequel l'unité de libération (121) est en outre configurée pour :

> envoyer un premier message de reconfiguration de commande de ressource radio, RRC, au deuxième noeud relais, dans lequel le premier message de reconfiguration RRC transporte un paramètre de bloc d'informations maître, MIB, d'une cellule dont l'accès est interdit au premier noeud relais ;
> libérer la connexion entre le premier noeud relais et le deuxième noeud relais pendant un processus de déconnexion du deuxième noeud relais du premier noeud relais.

12. Premier noeud relais (120) selon la revendication 7, comprenant en outre une troisième unité de gestion d'accès configurée pour diffuser un message MIB après la détection du fait que la liaison radio de niveau supérieur échoue, dans lequel le message MIB transporte un paramètre MIB d'une cellule dont l'accès est interdit au premier noeud relais ; l'envoi d'un message de radiomessagerie à un terminal dans un état au repos ou inactif connecté au premier noeud relais ; et l'envoi d'un second message de reconfiguration RRC à un terminal dans un état de connexion connecté au premier noeud relais, dans lequel le second message de reconfiguration RRC transporte un paramètre MIB d'une cellule dont l'accès est interdit au premier noeud relais.

13. Support de stockage lisible par ordinateur dans lequel est stocké un programme informatique, **caractérisé en ce que** le programme informatique est configuré pour être exécuté par un processeur pour mettre en oeuvre les étapes du procédé de traitement d'interruption de liaison selon l'une quelconque des revendications 1 à 6.

Fig.1

Fig.2

Fig.3

Donor gNB

*Wired interface*

Relay node 4

Relay node 1

Wireless backhaul node 3

Relay node 5

Relay node 2

Relay node 6

Terminal

Fig.4

51

Releasing, by the first relay node upon detection that an upper-level radio link on the wireless backhaul path fails, a connection between the first relay node and a second relay node

Fig.5

Releasing, by the second relay node upon detection of a first relay node that an upper-level radio link on the wireless backhaul path fails, a connection between the second relay node and the first relay node, the first relay node is an upper-level relay node of the second relay node on the wireless backhaul path    61

Fig.6

Releasing, by the relay node after an upper-level radio link on the wireless backhaul path fails, connections between the relay node and all terminals; and sending, in a case that there is a lower-level relay node of the relay node on the wireless backhaul path, to the lower-level relay node an indication message indicating that the upper-level radio link fails    71

Fig.7

Fig.8

Fig.9

Fig.10

Fig.11

Fig.12

1300

Second relay node

1301 — Processor

Bus interface

Transceiver — 1302

1303 — Storage

Fig.13

Second relay node

140

Release unit — 141

Fig.14

1500

Relay node

1501 — Processor

Bus interface

Transceiver — 1502

1503 — Storage

Fig.15

**Relay node**

**Release unit** — 161

**Transceiver unit** — 162

160

Fig.16

1700

Target relay node

1701 — Processor

Bus interface

Transceiver — 1702

1703 — Storage

Fig.17